(19) Europäisches Patentamt
European Patent Office
Office européen des brevets

(11) **EP 4 748 873 A1**

(12) **EUROPEAN PATENT APPLICATION**
published in accordance with Art. 153(4) EPC

(43) Date of publication:
**27.05.2026 Bulletin 2026/22**

(21) Application number: **24863180.6**

(22) Date of filing: **04.09.2024**

(51) International Patent Classification (IPC):
*C08J 3/12* (2006.01)          *C08F 6/18* (2006.01)
*H01M 4/62* (2006.01)          *C08J 3/16* (2006.01)

(52) Cooperative Patent Classification (CPC):
**C08F 6/18; C08J 3/12; C08J 3/16; H01M 4/62;**
**Y02E 60/10**

(86) International application number:
**PCT/KR2024/013310**

(87) International publication number:
**WO 2025/053600 (13.03.2025 Gazette 2025/11)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **05.09.2023  KR 20230117575**
               **05.09.2023  KR 20230117590**

(71) Applicant: **LX MMA CORP.**
**Yeosu-si, Jeollanam-do 59613 (KR)**

(72) Inventors:
• **JEON, Seong Jang**
  **Daejeon 34122 (KR)**

• **KIM, Bub Sung**
  **Daejeon 34122 (KR)**
• **KANG, Da Hyun**
  **Daejeon 34122 (KR)**
• **PARK, Sung Il**
  **Daejeon 34122 (KR)**

(74) Representative: **Ter Meer Steinmeister & Partner**
**Patentanwälte mbB**
**Nymphenburger Straße 4**
**80335 München (DE)**

Remarks:
A request for correction of the drawing has been filed pursuant to Rule 139 EPC. A decision on the request will be taken during the proceedings before the examining division (Guidelines for Examination in the EPO, A-V, 3).

(54) **CORE-SHELL PARTICLE COMPRISING CORE AGGREGATE-TYPE CORE IN WHICH FLUORINE-BASED RESIN PARTICLES ARE AGGREGATED AND SHELL LAYER FORMED OF ACRYLIC RESIN PARTICLES, AND METHOD FOR PRODUCING SAME**

(57)     The present disclosure relates to a new type of core-shell particle in which are formed an aggregate-type core formed by aggregating fluorine-based resin particles and a shell layer formed by closely aggregating acrylic resin particles, and a method for producing same, wherein, surprisingly, the core-shell particle not only has remarkably good flowability and excellent storage stability, but also has better binder properties than single polytetrafluoroethylene particles.

[FIG. 1]

EP 4 748 873 A1

## Description

[Technical Field]

The present disclosure relates to an aggregate-type core-shell particle including an aggregate-type core in which fluorine-based resin particles are aggregated and a shell layer formed of acrylic-based resin particles on a surface of the aggregate-type core, the aggregate-type core-shell particle having excellent flowability, excellent storability (storage property), and excellent fibrillation.

[Background Art]

A fluorine-based resin may be used for various applications such as various adhesives, processing aids, and flow agents due to its electrical properties, thermal properties, bonding properties, and the like, and for example, may be used as various materials for the electrode binder, an anti-dripping agent, a powder coating material, a fiber coating material, or an automobile part.

However, the fluorine-based resin has a problem in that its flowability is poor in processes such as transportation, storage, processing, or stirring. The problem of low flowability of the fluorine-based resin generally appears as fluorine-based resins agglomerate with each other in advance in processes such as transportation, processing, storage, or stirring, when the fluorine-based resin in the form of resin (particles or powder) is subjected to such processes.

In order to solve the problem of low flowability of the fluorine-based resin and at the same time to realize higher performance, studies have been conducted to modify a surface of the fluorine-based resin, or to form a shell layer on a surface of the fluorine-based resin using a resin having different surface characteristics and the like.

However, Patent Document 1 (Japanese Patent Laid-Open Publication No. JP 2019-112620 A) discloses a core-shell particle having a core including a perfluoropolymer and a shell layer including a non-fluorine-based resin, but a technical limitation remains in that the fluorine-based resin still has insufficient binder properties and insufficient flowability.

In addition, a core-shell particle in which a shell layer is formed of a non-fluorine-based resin on a conventional fluorine-based particle has, in addition to the above-described problems, low storability to an extent that commercial use is impractical, because when a high load is applied during storage, the particles agglomerate with each other to form a cake.

Accordingly, there is a need for a core-shell particle including a fluorine-based resin, the core-shell particle having markedly excellent flowability, excellent storability (storage property), and at the same time, excellent binder properties.

## [Disclosure]

[Technical Problem]

An aspect of the present disclosure is to provide a novel core-shell particle that may solve problems of low flowability, low binder properties, and low storability of a conventional single fluorine-based resin and a single core-shell particle coated with a shell layer formed by polymerization on a surface of the single fluorine-based resin particles, the novel core-shell particle including an aggregate-type core in which fluorine-based resin particles are aggregated and acrylic-based resin particles that are aggregated and formed on a surface of the aggregate-type core.

Another aspect of the present disclosure is to provide a method for producing core-shell particles each including an aggregate-type core in which fluorine-based resin particles are aggregated with each other and a shell layer formed by aggregation of acrylic-based resin particles as an outer layer on a surface of the aggregate-type core.

Still another aspect of the present disclosure is to provide a core-shell particle in which fluorine-based resin particles may be easily aggregated, a form of an aggregate-type core formed of the aggregated fluorine-based resin particles is maintained, and a shell layer may be formed, and a method for producing the same.

[Technical Solution]

In one general aspect, a core-shell particle includes: an aggregate-type core formed by aggregation of fluorine-based resin particles with each other; and a shell layer formed by aggregation of acrylic-based resin particles with each other on a surface of the aggregate-type core, wherein the core-shell particle has an average particle diameter (D50) of 500 to 3,000 $\mu$m.

In an embodiment of the present disclosure, the fluorine-based resin particles may include a fluorine-based polymer formed by polymerizing one or two or more fluorinated monomers selected from vinylidene difluoride, vinyl fluoride, chlorotrifluoroethylene, tetrafluoroethylene, perfluoroalkyl vinyl ether, and hexafluoropropylene.

In an embodiment of the present disclosure, the fluorine-based polymer may be formed by polymerizing one or two or more selected from tetrafluoroethylene, perfluoroalkyl vinyl ether, and hexafluoropropylene.

The acrylic-based resin particles may include one or two or more selected from a methyl methacrylate homopolymer; and an acrylic-based copolymer of methyl methacrylate and one or two or more comonomers selected from ethyl (meth)acrylate, n-butyl (meth)acrylate, t-butyl (meth)acrylate, I-butyl (meth)acrylate, lauryl (meth)acrylate, 2-ethylhexyl (meth)acrylate, and a styrene-based monomer.

In an embodiment of the present disclosure, the acrylic-based resin particles may include an acrylic-based copolymer.

In an embodiment of the present disclosure, the acrylic-based copolymer may have methyl methacrylate polymerized units in an amount of 70 to 99.9 wt% based on 100 wt% of the total polymerized units.

In an embodiment of the present disclosure, the aggregate-type core may be in the form of an aggregate in which fluorine-based resin particles having an average particle diameter (D50) of 0.01 to 100 $\mu$m are closely aggregated with each other, and the aggregate-type core may have an average particle diameter (D50) of 200 to 2,500 $\mu$m.

In an embodiment of the present disclosure, the fluorine-based resin particles may have an average particle diameter (D50) of 0.1 to 50 $\mu$m.

In an embodiment of the present disclosure, the shell layer may have a thickness of 50 to 500 $\mu$m.

In an embodiment of the present disclosure, the acrylic-based resin particles may have an average particle diameter (D50) of 0.01 to 100 $\mu$m.

In an embodiment of the present disclosure, the acrylic-based resin particles may have an average particle diameter (D50) of 0.1 to 50 $\mu$m.

In an embodiment of the present disclosure, the core-shell particle may include the shell layer in an amount of 1 to 50 wt% based on the total weight thereof.

In an embodiment of the present disclosure, the aggregate-type core may be coated with the shell layer on 90% or more of the entire surface area thereof.

In an embodiment of the present disclosure, the aggregate-type core may be coated with the shell layer on 100% of the entire surface area thereof except for voids between the acrylic-based resin particles.

In an embodiment of the present disclosure, the core-shell particle may include one or two or more coagulants selected from acetate, sulfate, and nitrate.

In an embodiment of the present disclosure, the core-shell particle may have a shear force (Cohesion Thickness) of 50 mJ/kg or less between a static core-shell particle and a flowing core-shell particle, as measured 100 times at 0.3 rpm using a dynamic powder flow analyzer manufactured by Mercury Scientific Inc.

In an embodiment of the present disclosure, the core-shell particle may have a cohesive breakage energy (Break Energy) of 100 mJ/kg or less required for a static core-shell particle to form an avalanche, as measured 100 times at 0.3 rpm using a dynamic powder flow analyzer manufactured by Mercury Scientific Inc.

In an embodiment of the present disclosure, the core-shell particle may have a total flowability energy (Basic Flowability Energy, BFE) of 1,000 mJ or less and a cohesive energy (Specific Energy, SE) of 10 mJ/kg or less, as measured using a powder rheometer manufactured by Freeman Technology Ltd.

In another general aspect, a mixture includes the core-shell particles described above.

In an embodiment of the present disclosure, the mixture may include an electrode active material.

In an embodiment of the present disclosure, the mixture may include the core-shell particles in an amount of 0.1 to 20 wt% based on the total weight thereof.

In an embodiment of the present disclosure, 95 wt% or more of the mixture may be retained on a 6.3-mm sieve.

In still another general aspect, a method for producing the core-shell particles includes: forming an aggregate-type core in which fluorine-based resin particles are aggregated by adding a first dispersion solution in which the fluorine-based resin particles are dispersed to an aqueous solution containing an organic solvent and a coagulant; and forming a shell layer by adding a second dispersion solution in which acrylic-based resin particles are dispersed to the aqueous solution in which the aggregate-type core is formed, so that the acrylic-based resin particles are aggregated on a surface of the aggregate-type core, wherein the aggregate-type core has an average particle diameter (D50) of 200 to 2,500 $\mu$m.

In an embodiment of the present disclosure, the organic solvent may be a $C_1$-$C_7$ aliphatic alcohol, a $C_1$-$C_4$ alkyl acetate, or a mixed solvent thereof.

In an embodiment of the present disclosure, the aqueous solution may contain deionized water and an organic solvent mixed at a weight ratio of 1:0.1 to 9.

In an embodiment of the present disclosure, the coagulant may be one or two or more selected from acetate, sulfate, and nitrate.

In an embodiment of the present disclosure, the coagulant may be contained in the aqueous solution at a concentration of 0.1 to 5 wt%.

In an embodiment of the present disclosure, in the forming of the aggregate-type core, the first dispersion solution may be added in an amount of 10 to 60 parts by weight based on 100 parts by weight of the aqueous solution.

In an embodiment of the present disclosure, in the forming of the aggregate-type core, a stirring speed may be 100 to 1,000 rpm.

In an embodiment of the present disclosure, in the forming of the aggregate-type core, the fluorine-based resin particles may be aggregated at 40 to 90°C.

In an embodiment of the present disclosure, the first dispersion solution may have a solid content of 30 to 80 wt% based on the total weight thereof.

In an embodiment of the present disclosure, in the forming of the aggregate-type core, the fluorine-based resin particles may be aggregated at 50 to 90°C.

In an embodiment of the present disclosure, the second dispersion solution may have a solid content of 10 to 50 wt% based on the total weight thereof.

In an embodiment of the present disclosure, in the method for producing the core-shell particles, the first dispersion solution and the second dispersion solution may be added at a weight ratio of 1:0.1 to 1.5.

[Advantageous Effects]

In an embodiment of the present disclosure, as measured between the core-shell particles by measurement methods defined in the present disclosure, the core-shell particles may have a flowability shear force (Cohesion Thickness) of 50 mJ/kg or less, 30 mJ/kg or less, and preferably 25 mJ/kg or less, and may have a cohesive breakage energy (Break Energy) of 100 mJ/kg or less, 70 mJ/kg or less, preferably 65 mJ/kg or less, and more preferably 50 mJ/kg or less. Accordingly, the core-shell particles may have markedly excellent flowability without agglomerating in processes such as transportation, processing, storage, or stirring.

In an embodiment of the present disclosure, in a storage stability evaluation as measured by the measurement method defined in the present disclosure, there is no caking at all caused by agglomeration of the core-shell particles with each other, and thus the core-shell particles may be used even after long-term storage.

In an embodiment of the present invention, since the core-shell particles have markedly excellent binder performance and fibrillation as defined in the present invention, a mixture including the same as a binder may be provided, and in particular, the core-shell particles may be useful as an electrode active material binder.

In an embodiment of the present disclosure, the method for producing the core-shell particles may include forming an aggregate-type core formed by aggregation of fluorine-based resin particles with each other and forming an acrylic-based shell layer including acrylic-based resin particles. The method may provide not only easy processability, productivity, and economic feasibility, but also the produced core-shell particles may have excellent flowability with low agglomeration, excellent storage stability, and excellent binder properties.

In an embodiment of the present disclosure, in the method for producing the core-shell particles, the aggregate-type core as a core in a form in which fluorine-based resin particles are aggregated with each other may form an aggregate of fluorine-based resin particles aggregated with each other, and average particle diameters of the aggregate-type core and the core-shell particle including the same may be easily adjusted even by a simple process.

Accordingly, since the entire surface of the aggregate-type core particle is covered with shell particles at a uniform thickness, the core-shell particles may have excellent flowability and excellent storage stability, and may maintain excellent binder properties of the fluorine-based resin particles, thereby allowing a user to control, as intended, the point at which fibrillation of the fluorine-based resin occurs.

Therefore, the core-shell particles may be useful as an anti-dripping agent, a powder coating material, a fiber coating material, an automobile part, or an electrode binder.

[Description of Drawings]

FIG. 1 illustrates an aggregate-type core-shell particle of Example 1.

FIG. 2 illustrates a single-type core-shell particle of Comparative Example 1.

FIG. 3 is an image of the aggregate-type core of Example 1 captured by an optical microscope.

FIG. 4 is an image of the aggregate-type core of Example 1 captured by a scanning electron microscope.

FIG. 5 is an image of the core-shell particle of Example 1 captured by a scanning electron microscope (SEM).

FIG. 6 is a scanning electron microscope image of the core-shell particle of Example 1 after cutting, captured to confirm formation of a core aggregate portion and a shell layer of the core-shell particle.

FIG. 7 is an image of the core-shell particle of Example 1 before cutting and after cutting, captured by energy dispersive X-ray spectrometry (SEM-EDX).

FIG. 8 shows images of particles retained on a sieve after a storage stability evaluation: FIG. 8A is an image of the aggregate-type core-shell particles of Example 1; FIG. 8B is an image of the single-type core-shell particles of Comparative Example 1; and FIG. 8C is an image of single PTFE particles of Comparative Example 2.

FIG. 9 is an image of a kneaded mixture including the aggregate-type core-shell particles of Example 1 after sieving, captured by a scanning electron microscope (SEM).

FIG. 10 is an image of a kneaded mixture including the single-type core-shell particles of Comparative Example 1 after sieving, captured by a scanning electron microscope (SEM).

[Best Mode]

Hereinafter, the core-shell particle and a method for producing the same will be described. In this case, unless otherwise defined, all the technical terms and scientific terms used herein have the general meanings as commonly understood by those skilled in the art to which the invention pertains, and the description for the known function and configuration unnecessarily obscuring the gist of the present disclosure will be omitted in the following description.

In addition, unless the context clearly indicates otherwise, singular forms used in the present disclosure may be intended to include plural forms.

In addition, unless otherwise specified in the present disclosure, units used herein are based on weight; for example, the unit of % or ratio is expressed as wt%, and the temperature expressed as °C unless otherwise defined.

In addition, a numerical range used in the present disclosure includes upper and lower limits and all values within the range, increments logically derived from a form and span of a defined range, all doubly limited values, and all possible combinations of the upper and lower limits in the numerical range defined in different forms.

Unless otherwise specifically defined in the present specification of the present disclosure, values out of the numerical range that may occur due to experimental errors or rounded values also fall within the defined numerical range.

The term "comprise(s)" described in the present disclosure is an open-ended description having a meaning equivalent to the term such as "include(s)", "contain(s)", "have (has) ", or "is/are characterized by", and does not exclude elements, materials, or processes which are not further listed.

In the present disclosure, the term "(meth)acrylate" may mean "acrylate" or "methacrylate".

Hereinafter, a core-shell particle according to the present disclosure will be described.

In an aspect of the present disclosure, the core-shell particle may include an aggregate-type core formed by aggregation of fluorine-based resin particles and a shell layer formed by aggregation of acrylic-based resin particles with each other on a surface of the aggregate-type core.

The core-shell particle having such a structure may surprisingly have markedly excellent flowability and excellent binder properties, as compared to conventional fluorine-based resins (powders or particles) and conventional fluorine-based resin particles coated with a resin other than a fluororesin.

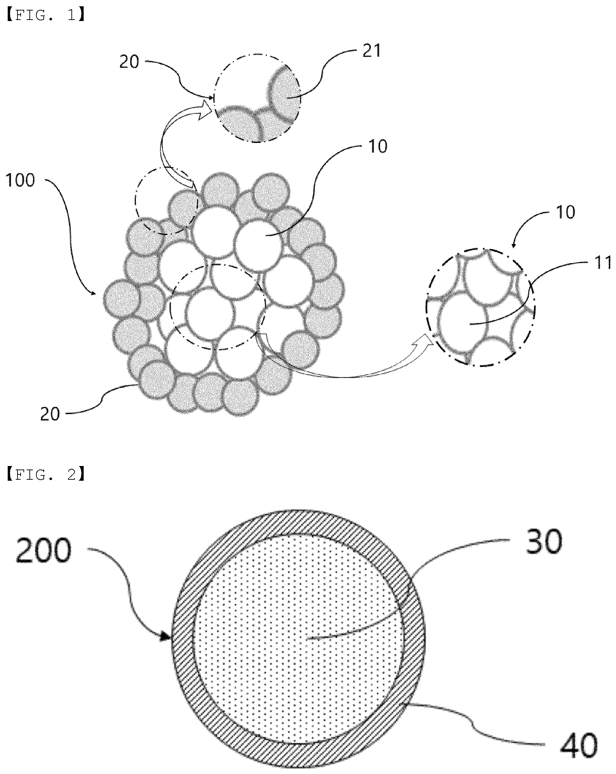

In an embodiment of the present disclosure, as illustrated in FIG. 1, a core-shell particle 100 may include an aggregate-type core 10 formed by aggregation of fluorine-based resin particles 11 with each other and a shell layer 20 formed by close aggregation of acrylic-based resin particles 21 with each other on a surface of the aggregate-type core 10.

The core-shell particle having such a structure may surprisingly have markedly excellent flowability and excellent binder properties, as compared to conventional fluorine-based resins (powders or particles) and conventional fluorine-based resin particles coated with a different resin.

In an embodiment of the present disclosure, as illustrated in FIG. 1, the core-shell particle 100 may include an aggregate-type core 10 formed by aggregation of fluorine-based resin particles 11 with each other and a shell layer 20 formed by close aggregation of acrylic-based resin particles 21 with each other on a surface of the aggregate-type core 10.

In an embodiment, as illustrated in FIG. 2, the above-described conventional single-type core-shell particle 200 may have a structure in which a polymerized shell layer 40 formed by polymerizing monomers is formed on a surface of a single fluorine-based resin particle 30.

The core-shell particle 100 may have markedly improved flowability and excellent storability, as compared to the single-type core-shell particle 200 in which the polymerized shell layer 40 is formed on the single fluorine-based resin particle 30, and may have excellent binder properties at the same time. Accordingly, the core-shell particle 100 may be preferred because it may have excellent handling properties in processes.

In an embodiment of the present disclosure, the fluorine-based resin particles may be in a particulate form containing a fluorine-based resin. The fluorine-based resin is not particularly limited as long as it is capable of fibrillation, and may include, for example, a fluorine-based polymer formed by polymerizing one or two or more fluorine-based monomers selected from vinylidene difluoride, vinyl fluoride, chlorotrifluoroethylene, tetrafluoroethylene, perfluoroalkyl vinyl ether, and hexafluoropropylene.

In another embodiment of the present disclosure, the fluorine-based monomer may be one or two or more perfluoro monomers selected from tetrafluoroethylene, perfluoroalkyl vinyl ether, and hexafluoropropylene.

The fluorine-based polymer may have high heat resistance, excellent fibrillation, and excellent binder properties, and may thus be useful as an anti-dripping agent, a powder coating material, a fiber coating material, an automobile part, or an electrode binder. A fluorine-based polymer formed by polymerizing the perfluoro monomers described above may have further improved heat resistance, further improved binder properties, and excellent fibrillation, and may thus be particularly useful as an electrode binder; however, the present disclosure is not limited thereto.

In an embodiment of the present disclosure, the fluorine-based polymer is not particularly limited as long as it does not impair the physical properties of the core-shell particles to be produced; however, as a non-limiting example, the fluorine-based polymer may be obtained by further polymerizing the fluorine-based monomer with one or two or more α-olefin-based monomers having no fluorine substituent, selected from ethylene, propylene, n-butylene, and methyl methacrylate.

As the fluorine-based polymer, a homopolymer of the fluorine-based monomer described above is preferably used from the viewpoint of achieving further improved binder properties of the produced core-shell particles; however, the α-olefin-based monomer described above may also be further included in the fluorine-based polymer.

For example, when the fluorine-based polymer is a copolymer that further includes an α-olefin-based monomer, the amount of polymerized units derived from the fluorine-based monomer may be 70 wt% or more, based on 100 wt% of the total polymerized units; and in another embodiment, the amount may be 80 wt% or more or 90 wt% or more. Although an upper limit is not limited, the amount may be less than 100 wt% or 99 wt% or less. The core-shell particle including a fluorine-based resin satisfying the above range of polymerized units may have even more markedly excellent heat resistance and binder properties and may thus be preferred. More preferably, the fluorine-based polymer may be polytetrafluoroethylene, and the polytetrafluoroethylene satisfies the above range of polymerized units and is formed by polymerizing perfluoro monomers, and may thus be the best embodiment; however, the present disclosure is not limited thereto.

In an embodiment of the present disclosure, the fluorine-based resin particles may include one or two or more selected from a plasticizer, an emulsifier, a thermal stabilizer, and a lubricant, as long as the physical properties of the core-shell particles to be produced are not impaired.

The fluorine-based resin particles may further include the above additives depending on a material for an anti-dripping agent, a powder coating material, a fiber coating material, an automobile part, or an electrode binder, thereby providing optimal physical properties for each material.

In an embodiment of the present disclosure, the fluorine-based resin particles may have an average particle diameter (D50) of 0.01 μm or more, 0.05 μm or more, 0.10 μm or more, 0.15 μm or more, or 0.20 μm or more, and 90.00 μm or less, 80.00 μm or less, 70.00 μm or less, 60.00 μm or less, 50.00 μm or less, 40.00 μm or less, 30.00 μm or less, 20.00 μm or less, 15.00 μm or less, 10.00 μm or less, 8.00 μm or less, 7.00 μm or less, 6.00 μm or less, or 5.00 μm or less. For example, the average particle diameter (D50) may be 0.01 to 100.00 μm, 0.01 to 50.00 μm, 0.01 to 30.00 μm, 0.01 to 20.00 μm, 0.01 to 10.00 μm, 0.01 to 5 μm, 0.05 to 5 μm, or 0.1 to 5 μm.

Fluorine-based resin particles satisfying the above average particle diameter range may be well aggregated to form an aggregate-type core. Accordingly, the core-shell particles including the same may have markedly excellent flowability, excellent storage stability, and excellent binder properties, and may thus be preferred; however, the present disclosure is not limited thereto as long as the fluorine-based resin particles may be aggregated to form the aggregate-type core and do not impair physical properties of the core-shell particles including the same.

In another embodiment of the present disclosure, the fluorine-based resin particles may preferably have an average particle diameter (D50) of 0.1 to 1 μm or 0.1 to 0.5 μm, from the viewpoint that the core-shell particles including the fluorine-based resin particles have further improved flowability, excellent handling properties, and excellent binder properties; however, the average particle diameter (D50) is not limited thereto.

In an embodiment of the present disclosure, the aggregate-type core may be in the form of an aggregate in which fluorine-based resin particles having an average particle diameter within the above range are closely aggregated with each other, and the aggregate-type core may have an average particle diameter (D50) of 200 to 2,000 μm.

In another embodiment of the present disclosure, the aggregate-type core may have an average particle diameter (D50) of 200 μm or more, 300 μm or more, 400 μm or more, 500 μm or more, 600 μm or more, or 700 μm or more, and 1,800 μm or less, 1,500 μm or less, 1,300 μm or less, 1,200 μm or less, or 1,000 μm or less. For example, the average particle diameter (D50) may be 200 to 1,800 μm, 200 to 1,500 μm, 200 to 1,000 μm, 500 to 1,000 μm, or 700 to 1,000 μm.

An aggregate-type core having an average particle diameter within the above range is coated with a shell layer on 90% or more of the entire surface area thereof, and core-shell particles including the same not only have markedly excellent flowability and excellent storability but also have excellent binder properties, and may thus be useful as, for example, an electrode binder and a powder coating material. Preferably, the shell layer is formed by coating the entire surface of the aggregate-type core.

The core-shell particles may have markedly excellent flowability and excellent binder properties, since the shell layer is formed by aggregation of acrylic-based resin particles having physical properties entirely different from those of the fluorine-based resin particles.

In an embodiment of the present disclosure, the acrylic-based resin particles may include one or two or more selected from a methyl methacrylate homopolymer and an acrylic-based copolymer formed by copolymerizing methyl methacrylate with one or two or more comonomers selected from ethyl (meth)acrylate, n-butyl (meth)acrylate, t-butyl (meth)acrylate, I-butyl (meth)acrylate, lauryl (meth)acrylate, 2-ethylhexyl (meth)acrylate, and α-styrene.

In another embodiment of the present disclosure, the acrylic-based resin particles may include an acrylic-based copolymer.

The acrylic-based resin particles are not particularly limited, as long as they do not impair the physical properties of the shell layer formed therefrom and the core-shell particles. However, an acrylic-based copolymer formed by polymerizing methyl methacrylate with the above comonomers may more readily form the shell layer, and the produced core-shell particles may have markedly excellent flowability and excellent storability (storage property); therefore, such an acrylic-based copolymer may be preferred.

In an embodiment of the present disclosure, the acrylic-based copolymer included in the acrylic-based resin particles may be an acrylic-based copolymer formed by copolymerizing methyl methacrylate with a comonomer selected from n-butyl (meth)acrylate, t-butyl (meth)acrylate, and iso-butyl (meth)acrylate.

In another embodiment, the acrylic-based copolymer may be preferably a methyl methacrylate-n-butyl acrylate copolymer, but is not limited thereto.

In an embodiment of the present disclosure, the acrylic-based copolymer may have methyl methacrylate polymerized units in an amount of 70 to 99.9 wt% based on 100 wt% of the total polymerized units; and in another embodiment, the amount may be 80 to 99.9 wt%, 80 to 95 wt%, 80 to 90 wt%, or 80 to 85 wt%.

An acrylic-based copolymer satisfying the above range of polymerized units may be preferred for use in forming the shell layer of the core-shell particle, since core-shell particles including the same may have excellent storability and flowability.

In an embodiment of the present disclosure, the acrylic-based resin particles may include one or two or more additives selected from a plasticizer, an emulsifier, a thermal stabilizer, and a lubricant, as long as the additives do not impair the physical properties of the core-shell particles to be produced.

Depending on the material in which the produced core-shell particles are used, such as an anti-dripping agent, a powder coating material, a fiber coating material, an automobile part, or an electrode binder, the acrylic-based resin particles may further include the above additives, thereby providing optimum physical properties for each material.

In an embodiment of the present disclosure, the acrylic-based resin particles may have an average particle diameter (D50) of 0.01 $\mu$m or more, 0.05 $\mu$m or more, or 0.10 $\mu$m or more, and 100.00 $\mu$m or less, 80.00 $\mu$m or less, 70.00 $\mu$m or less, 60.00 $\mu$m or less, 50.00 $\mu$m or less, 30.00 $\mu$m or less, 20.00 $\mu$m or less, 10.00 $\mu$m or less, 7.00 $\mu$m or less, or 5.0 $\mu$m or less. For example, the average particle diameter (D50) may be 0.01 to 100.00 $\mu$m, 0.05 to 100.00 $\mu$m, 0.1 to 100.00 $\mu$m, 0.1 to 50 $\mu$m, 0.1 to 20 $\mu$m, 0.1 to 10.00 $\mu$m, or 0.1 to 5.00 $\mu$m.

The acrylic-based resin particles having an average particle diameter within the above range may be aggregated with each other on the surface of the aggregate-type core to more readily form the shell layer, and the produced core-shell particles may thus have markedly improved flowability; therefore, such acrylic-based resin particles may be preferred.

In another embodiment of the present disclosure, the acrylic-based resin particles may have an average particle diameter of 0.1 to 1 $\mu$m or 0.5 to 1 $\mu$m, from the viewpoint of more readily forming the shell layer on the surface of the core aggregate, but are not limited thereto.

In an embodiment of the present disclosure, the core-shell particle may include one or two or more coagulants selected from acetate, sulfate, and nitrate.

The coagulant for the core-shell particles may aggregate the fluorine-based resin particles in a production method to be described below to form an aggregate-type core, and may aggregate the acrylic-based resin particles on the surface of the formed aggregate-type core to form a shell layer.

In addition, the core-shell particle may include a residual coagulant remaining from a production method to be described below, thereby allowing the fluorine-based resin particles and the acrylic-based resin particles to remain in an aggregated form, and such a core-shell particle may be preferred; however, the present disclosure is not limited thereto.

The coagulant is described in more detail in a method for producing the core-shell particles to be described below, and thus a detailed description thereof is omitted.

In an embodiment of the present disclosure, the shell layer of the core-shell particle may have a thickness of 50 to 500 $\mu$m, 300 $\mu$m or less, 200 $\mu$m or less, 150 $\mu$m or less, or 100 $\mu$m or less; and may be, for example, 50 to 200 $\mu$m, 50 to 150 $\mu$m, or 50 to 100 $\mu$m, or values in intermediate ranges between the above upper and lower limits.

The core-shell particle in which a shell layer satisfying the above thickness range is formed may, surprisingly, maintain excellent binder properties of the fluorine-based resin particles and may have even more markedly improved flowability and excellent storability, and may thus be preferred; however, the present disclosure is not limited thereto as long as desired physical properties in the present invention are satisfied.

The thickness of the shell layer of the core-shell particle was measured using the measurement method defined in the present invention. Specifically, the thickness was measured at five locations at a magnification of 50× using a scanning electron microscope (SEM), and an average value thereof was calculated.

In an embodiment of the present invention, the core-shell particles may have an average particle diameter (D50) of 500 $\mu$m or more, 520 $\mu$m or more, 600 $\mu$m or more, 620 $\mu$m or more, 700 $\mu$m or more, 830 $\mu$m or more, 900 $\mu$m or more, 930 $\mu$m or more, 950 $\mu$m or more, 960 $\mu$m or more, 974 $\mu$m or more, 984 $\mu$m or more, 1,000 $\mu$m or more, 1,020 $\mu$m or more, 1,040 $\mu$m or more, 1,051 $\mu$m or more, 1,100 $\mu$m or more, 1,103 $\mu$m or more, or 1,166 $\mu$m or more, and 3,000 $\mu$m or less,

2,500 µm or less, 2,000 µm or less, 1,800 µm or less, 1,750 µm or less, 1,600 µm or less, or 1,500 µm or less. For example, the average particle diameter (D50) may be 500 to 3,000 µm, 500 to 2,000 µm, 500 to 1,500 µm, or 1,000 to 1,500 µm. The average particle diameter (D50) of the core-shell particles may be adjusted by adjusting the average particle diameter of the aggregate-type core and the thickness of the shell layer, and may be readily adjusted depending on the stirring speed in a production method to be described below.

The core-shell particles satisfying the above range of average particle diameter may be incorporated into a powder coating material or an electrode binder with high dispersibility, and may have excellent flowability and excellent binder properties as described above and may thus be preferred. However, since the average particle diameter may be adjusted by a user depending on the intended use of the core-shell particles, the average particle diameter of the core-shell particles is not limited to the above range.

In an embodiment of the present disclosure, the core-shell particles may have an average particle diameter Span value of 1.50 or less, 1.45 or less, 1.43 or less, 1.40 or less, 1.38 or less, 1.35 or less, 1.33 or less, 1.31 or less, 1.30 or less, 1.27 or less, 1.26 or less, 1.25 or less, 1.24 or less, 1.23 or less, or 1.20 or less, and 1.05 or more, 1.10 or more, or 1.15 or more, when measured by the average particle diameter measurement method described above. For example, the Span value may be 1.05 to 1.50, 1.05 to 1.45, 1.05 to 1.40, 1.05 to 1.38, 1.05 to 1.33, 1.05 to 1.30, 1.05 to 1.27, 1.05 to 1.26, 1.05 to 1.23, or 1.05 to 1.20.

The core-shell particles may have an average particle diameter distribution with a Span value of 1.5 or less even when having an average particle diameter of 500 µm or more as described above. Accordingly, since the core-shell particles may have a highly uniform average particle diameter, the core-shell particles may be useful as a material for a binder, a powder coating material, a fiber coating material, or an automobile part.

In an embodiment of the present invention, the core-shell particle may include the shell layer in an amount of 1 to 50 wt% based on the total mass thereof, and, from the viewpoint of achieving both excellent flowability and binder properties, the amount of the shell layer is preferably 1 to 30 wt% and more preferably 10 to 30 wt%.

A core-shell particle including the shell layer in an amount within the above range may simultaneously satisfy markedly excellent flowability and excellent binder properties and may thus be particularly useful as an electrode binder; however, the present disclosure is not limited thereto as long as the desired physical properties of the present invention are satisfied.

In an embodiment of the present disclosure, the aggregate-type core may be coated with the shell layer on 90% or more, preferably 91% or more, 92% or more, 93% or more, 94% or more, 95% or more, 96% or more, 97% or more, or 98% or more, of the entire surface area thereof.

Since the shell layer may be well formed on the aggregate-type core, the core-shell particles may have excellent flowability, excellent handleability, and excellent storage stability, and may thus be preferred.

In an embodiment of the present disclosure, the aggregate-type core may be coated with the shell layer on 100% of the entire surface area thereof except for voids between the acrylic-based resin particles.

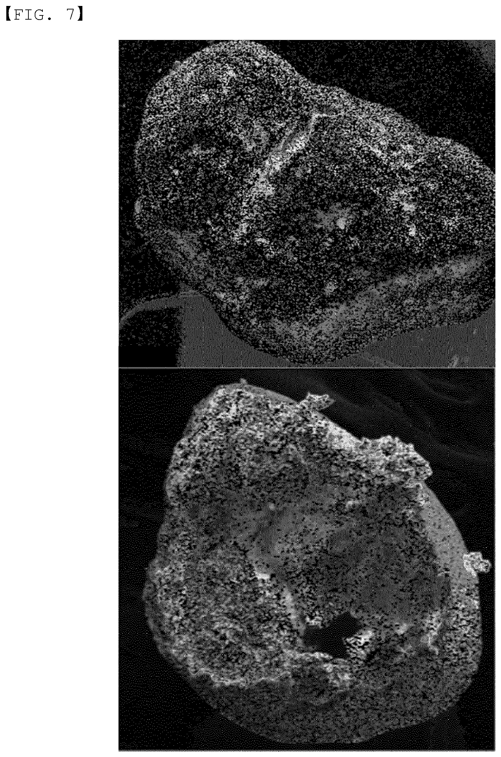

The core-shell particle may have a clear structure of the aggregate-type core and the shell layer, as shown in the photograph captured by energy dispersive X-ray spectrometry (SEM EDX) in FIG. 7, in which the aggregate-type core is formed of the fluorine-based resin particles and the shell layer is formed of the acrylic-based resin particles. In addition, since the shell layer is formed on 100% of the surface of the aggregate-type core, the core-shell particles may have markedly excellent flowability and excellent storage stability while simultaneously having excellent binder properties.

Hereinafter, a method for producing the core-shell particles will be described.

In an aspect of the present disclosure, the core-shell particles may be produced by: forming an aggregate-type core in which fluorine-based resin particles are aggregated by adding a first dispersion solution in which the fluorine-based resin particles are dispersed to an aqueous solution containing an organic solvent and a coagulant; and forming a shell layer by adding a second dispersion solution in which acrylic-based resin particles are dispersed to the aqueous solution in which the aggregate-type core is formed, so that the acrylic-based resin particles are aggregated on a surface of the aggregate-type core.

The method for producing the core-shell particles is not a conventional method of coating a single fluorine-based resin particle with an acrylic-based resin or modifying a surface of a single fluorine-based resin particle. That is, the present disclosure provides a core-shell particle including an aggregate-type core formed by aggregation of fluorine-based resin particles and a shell layer formed by aggregation of acrylic-based resin particles with each other on a surface of the aggregate-type core.

Unlike a conventional single core-shell particle including only fluorine-based resin particles, the core-shell particles may have markedly excellent flowability and excellent storage stability and may simultaneously have excellent binder properties, and may thus be useful as an anti-dripping agent, a powder coating material, a fiber coating material, an automobile part, and an electrode binder.

In addition, in the method for producing the core-shell particles, fluorine-based resin particles are aggregated to form an aggregate-type core, and then acrylic-based resin particles are aggregated on a surface of the core aggregate to form a shell layer, and thus the following unexpected properties may be obtained.

That is, as described above, the core-shell particles each have an aggregate-type core in which fluorine-based resin particles are aggregated and a shell layer coated with acrylic-based resin particles, and thus the core-shell particles do not agglomerate with each other and have markedly improved flowability, and also have excellent storage stability in that the core-shell structure is sufficiently maintained by the shell layer aggregated on the surface during multi-layer stacking packaging.

In addition, when the aggregate-type fluorine-based resin core and the shell layer of acrylic-based resin particles are formed, core-shell particles having substantially no individual single fluorine-based resin particles (primary particles, that is, non-aggregated particles) or substantially no individual single acrylic particles may be produced, and the process may have advantages of high cost-effectiveness and high productivity because a method for separating solids is simple.

In the forming of the aggregate-type core, an aqueous solution containing an organic solvent may be used, and thus polarity may be maintained, such that a uniform aggregate may be formed and residual non-aggregated fluorine-based resin particles may be prevented.

In addition, in the core-shell particles formed in the aqueous solution containing the organic solvent, fluorine-based resin particles are substantially aggregated with each other to form the aggregate-type core, and a shell layer formed by aggregation of only acrylic-based resin particles is formed on the surface of the aggregate-type core, enabling production of core-shell particles having a clear distinction between the core portion and the shell portion.

In an embodiment of the present disclosure, the organic solvent may be a $C_1$-$C_7$ aliphatic alcohol, a $C_1$-$C_4$ alkyl acetate, or a mixed solvent thereof, preferably a $C_1$-$C_7$ aliphatic alcohol, and more preferably methanol, ethanol, or butanol.

The above-described aliphatic alcohol may have excellent miscibility with water and may more readily maintain the polarity of the aqueous solution in forming an aggregate-type core by aggregation of fluorine-based resin particles and in forming a shell layer by aggregation of acrylic-based resin particles, and may thus be preferred; however, the present disclosure is not limited thereto.

In an embodiment of the present disclosure, in the forming of the aggregate-type core, the aqueous solution may contain deionized water and an organic solvent at a weight ratio of 1:0.1 to 9, preferably 1:0.3 to 9, and more preferably 1:0.3 to 5 or 1:0.3 to 1.

In the case of an aqueous solution in which deionized water and water are mixed at the above weight ratio, an aggregate-type core may be formed by aggregation of fluorine-based resin particles with each other and a shell layer may be formed by aggregation of acrylic-based resin particles with each other, enabling formation of a core-shell particle in which the aggregate-type core and the shell layer are clearly distinguishable, and such an aqueous solution may thus be preferred.

In an embodiment of the present disclosure, the coagulant may be, as described above, one or two or more selected from acetate, sulfate, and nitrate.

The coagulant may be used without limitation as long as it is known to those skilled in the art. For example, the coagulant may be an inorganic acid such as sulfuric acid, hydrochloric acid, phosphoric acid, or nitric acid; an organic acid such as acetic acid; a halide of an alkali metal such as sodium or potassium; an alkali metal salt with an inorganic acid; or an alkali metal salt with an organic acid.

In another embodiment of the present disclosure, the coagulant may be calcium acetate hydrate or aluminum nitrate hydrate, but is not limited thereto as long as the fluorine-based resin particles and the acrylic-based resin particles may each be aggregated with each other to produce core-shell particles.

In an embodiment of the present invention, the coagulant may be contained in the aqueous solution at a concentration of 0.1 to 5 wt%, preferably 0.1 to 3 wt%, and more preferably 0.1 to 1 wt%.

Core-shell particles produced in an aqueous solution containing the coagulant at a concentration within the above range may allow a shell layer in which acrylic-based resin particles are well aggregated with each other to be formed on a surface of the aggregate-type core, and may thus be preferred. In addition, deterioration of physical properties of the core-shell particles due to an excessive coagulant may be prevented; however, the coagulant may be used without limitation as long as aggregate-type core-shell particles may be produced.

Of course, in the formation of the aggregate-type core and the shell layer of the core-shell particle, the coagulant may also serve to allow the fluorine-based resin particles and the acrylic-based resin particles to be well aggregated with each other. In addition, as described above, the coagulant may remain in the core-shell particles to be produced, thereby maintaining the form of an aggregate-type core in which fluorine-based resin particles are aggregated and a shell layer formed by aggregation of acrylic-based resin particles on a surface of the aggregate-type core, and such core-shell particles may thus be preferred; however, the present disclosure is not limited thereto.

In an embodiment of the present disclosure, since the fluorine-based resin particles dispersed and included in the first dispersion solution in the forming of the aggregate-type core have the same monomer composition and average particle diameter (D50) as the fluorine-based resin particles described above, a detailed description thereof is omitted.

In an embodiment of the present disclosure, the first dispersion solution may have a solid content of 30 to 80 wt% based on the total weight thereof, and, in another embodiment, the solid content may be 30 to 70 wt% or 40 to 65 wt%, but is not limited thereto. As described above, many commercial products are available as the first dispersion solution, and the first dispersion solution may be prepared by using such a commercial product or by polymerization; therefore, a further description thereof is omitted.

In an embodiment of the present disclosure, in the forming of the aggregate-type core, the first dispersion solution may be added in an amount of 10 to 60 parts by weight based on 100 parts by weight of the aqueous solution, and, in another embodiment, the first dispersion solution may be added in an amount of 10 to 50 parts by weight, 10 to 40 parts by weight, or 10 to 30 parts by weight.

In the forming of the aggregate-type core by adding the first dispersion solution having the solid content within the above range to the aqueous solution, the aggregate-type core and core-shell particles including the same may be produced to have target average particle diameters, and excellent stirrability and excellent processability may be achieved during production; and such forming may thus be preferred.

In an embodiment of the present disclosure, the first dispersion solution may be a product obtained by emulsion polymerization or suspension polymerization of a fluorine-based polymer, may contain deionized water as a solvent, and may contain an emulsifier, a dispersant, a dispersion aid, a chain transfer agent, an initiator, and the like, but is not limited thereto as long as it is known to those skilled in the art.

In an embodiment of the present disclosure, in the forming of the aggregate-type core, a stirring speed may be 100 to 1,000 rpm, preferably 800 rpm or less, 700 rpm or less, and more preferably 500 rpm or less, or 200 rpm or more, and may satisfy a numerical range defined by the upper limit and the lower limit within the above range.

In the forming of the aggregate-type core, the stirring speed may adjust the average particle diameter of the aggregate-type core. That is, in the method for producing the core-shell particles, by controlling the stirring speed, an average particle diameter (D50) of each of the aggregate-type core to be produced and core-shell particles including the same may be readily adjusted.

Accordingly, the aggregate-type core formed at a stirring speed within the above-described range and core-shell particles including the same may have target average particle diameters and may thus be preferred; however, since the stirring speed may be controlled by those skilled in the art depending on the target average particle diameters, the present disclosure is not limited thereto.

In an embodiment of the present disclosure, in the forming of the aggregate-type core, the fluorine-based resin particles may be aggregated at 40 to 90°C, and in another embodiment, the fluorine-based resin particles may be aggregated at 50 to 90°C, 60 to 90°C, 60 to 80°C, or 60 to 70°C.

When the fluorine-based resin particles are aggregated at a temperature within the above range, the aggregate-type core may be well formed with excellent aggregation ability, and the fluorine-based resin particles do not become entangled due to fibrillation, enabling formation of an aggregate-type core in a form in which the fluorine-based resin particles are aggregated with each other as targeted in the present disclosure; thus, such aggregation may be preferred. However, the present disclosure is not limited thereto as long as the physical properties of the core-shell particles to be produced are not impaired.

In an embodiment of the present disclosure, in the forming of the aggregate-type core, the fluorine-based resin particles may be aggregated to prepare a dispersion solution in which the aggregate-type core is dispersed, and the dispersion solution in which the aggregate-type core is dispersed may have a solid content of 5 to 50 wt% based on the total mass thereof and, in another embodiment, the solid content may be 10 to 40 wt% or 10 to 30 wt%.

In the forming of the aggregate-type core, after the fluorine-based resin particles are aggregated, the aggregate-type core may be dispersed in the aqueous solution in an amount of 5 to 50 wt%, which may indicate that the added fluorine-based resin particles are well aggregated without residue to form the aggregate-type core.

In addition, an aqueous solution in which the aggregate-type core is dispersed at a solid content within the above range may, in forming a shell layer to be described below, allow acrylic-based resin particles to be well aggregated on a surface of the aggregate-type core to form the shell layer, and may thus be preferred; however, the present disclosure is not limited thereto as long as the physical properties of the core-shell particles to be produced are not impaired.

Accordingly, in the forming of the aggregate-type core, the average particle diameter of the aggregate-type core may be adjusted by controlling a stirring speed, a solid content of the first dispersion solution, and an aggregation reaction temperature, and, as described above, the average particle diameter (D50) may be 200 to 2,500 $\mu$m, and, in another embodiment, the average particle diameter (D50) may be 200 to 2,000 $\mu$m, 200 to 1,800 $\mu$m, 200 to 1,500 $\mu$m, 200 to 1,000 $\mu$m, 500 to 1,000 $\mu$m, or 700 to 1,000 $\mu$m.

A surface of an aggregate-type core having an average particle diameter within the above range may be coated with a shell layer on 90% or more, preferably 95% or more, and most preferably 100%, of the total area, and core-shell particles including the same may have markedly excellent flowability and excellent handleability, and may also have excellent binder properties due to good fibrillation, and may thus be useful as an electrode binder, a powder coating material, and the like.

In an embodiment of the present disclosure, in the forming of the shell layer, a second dispersion solution in which acrylic-based resin particles are dispersed may be added to the aqueous solution in which the above-described aggregate-type core is formed, such that the acrylic-based resin particles are aggregated on a surface of the aggregate-type core to form the shell layer.

The second dispersion solution may be prepared by polymerizing acrylic-based resin particles using emulsion polymerization or suspension polymerization, and may thus include water as a solvent and may include acrylic-based resin particles, and further may include an emulsifier, a dispersant, a chain transfer agent, and an initiator.

In a method for preparing the second dispersion solution, the second dispersion solution may be prepared by emulsion polymerization in preparation examples to be described below, and since this is a known technique, a detailed description thereof is omitted.

In an embodiment of the present disclosure, an average particle diameter (D50) of the acrylic-based resin particles dispersed in the second dispersion solution may be 0.01 to 100 $\mu$m, which may provide effects in the production method in addition to the physical property effects of the produced core-shell particles described above.

The acrylic-based resin particles having an average particle diameter within the above range may be preferred because they may provide effects in the production method in that the acrylic-based resin particles are well aggregated to uniformly form the shell layer; however, the present disclosure is not limited thereto as long as the shell layer may be formed on the aggregate-type core.

In an embodiment of the present disclosure, the combination of monomers to be polymerized and the polymerized units of the acrylic-based resin particles dispersed in the second dispersion solution have already been described above, and thus a detailed description thereof is omitted.

In an embodiment of the present disclosure, the second dispersion solution may have a solid content of 10 to 50 wt% based on the total weight thereof, and in another embodiment, the solid content may be 10 to 40 wt%, 10 to 30 wt%, or 10 to 20 wt%.

The second dispersion solution satisfying the solid content within the above range may be preferred because it may allow the shell layer to be formed better on the surface of the aggregate-type core and fewer acrylic-based resin particles may remain, thereby providing excellent productivity.

In an embodiment of the present invention, in the method for producing the core-shell particles, a weight ratio of the first dispersion solution to the second dispersion solution to be added may be 1:0.1 to 1.5, preferably 1:0.4 to 1.5, and more preferably 1:0.5 to 1.2.

The core-shell particles produced by adding the first dispersion solution and the second dispersion solution at the weight ratio within the above range may be preferred because, as described above, the core-shell particle may include the shell layer in an amount of 1 to 50 wt%, 1 to 30 wt%, or 10 to 30 wt% based on the total mass thereof, thereby providing both excellent flowability and binder properties.

Accordingly, the core-shell particles may simultaneously satisfy markedly excellent flowability and excellent binder properties and may thus be particularly useful as an electrode binder; however, the present disclosure is not limited thereto as long as the desired physical properties of the present invention are satisfied.

In an embodiment of the present disclosure, in the forming of the shell layer, the acrylic-based resin particles may be aggregated at 50 to 90°C, and in another embodiment, the shell layer may be formed by forming the acrylic-based resin particles at 70 to 85°C.

The forming of the shell layer at a temperature within the above range may be preferred because the form of the aggregate-type core may be maintained, the shell layer may be uniformly formed, and the physical properties of the acrylic-based resin particles may not be impaired.

Accordingly, the core-shell particle may have a form (two-dimensional core-shell particle) including an aggregate-type core in which fluorine-based resin particles are aggregated with each other and a shell layer formed by aggregation of acrylic-based resin particles on a surface of the aggregate-type core, and may simultaneously have markedly excellent flowability, excellent storage stability, and excellent binder properties, as compared with conventional single fluorine-based resin particles and conventional core-shell particles in which the single fluorine-based resin particles are coated with an acrylic-based resin.

In an embodiment of the present disclosure, the core-shell particles may have a flowability shear force (Cohesion Thickness) of 50.0 mJ/kg or less, 49.1 mJ/kg or less, 40.0 mJ/kg or less, 30.0 mJ/kg or less, 25.0 mJ/kg or less, 24.5 mJ/kg or less, 24.0 mJ/kg or less, 23.0 mJ/kg or less, 22.3 mJ/kg or less, 22.2 mJ/kg or less, 22.0 mJ/kg or less, 21.4 mJ/kg or less, 21.0 mJ/kg or less, 20.9 mJ/kg or less, 20.0 mJ/kg or less, 19.0 mJ/kg or less, 18.5 mJ/kg or less, 18.4 mJ/kg or less, 18.0 mJ/kg or less, 17.6 mJ/kg or less, 17.5 mJ/kg or less, 17.3 mJ/kg or less, 17.0 mJ/kg or less, 16.4 mJ/kg or less, or 16.0 mJ/kg or less, as measured by the measurement method defined in the present invention, and although the lower limit is not limited, the flowability shear force (Cohesion Thickness) may be 5.0 mJ/kg or more or 10.0 mJ/kg or more. For example, the flowability shear force of the core-shell particles may be 5 to 50 mJ/kg, 5 to 40 mJ/kg, 5 to 30 mJ/kg, 5 to 20 mJ/kg, or 10 to 20 mJ/kg.

In addition, in an embodiment of the present disclosure, the core-shell particles may have a cohesive breakage energy (Break Energy) of 100 mJ/kg or less, 80 mJ/kg or less, 76.8 mJ/kg or less, 70.0 mJ/kg or less, 65.0 mJ/kg or less, 61.5 mJ/kg or less, 60.0 mJ/kg or less, 59.3 mJ/kg or less, 55.2 mJ/kg or less, 52.8 mJ/kg or less, 50.1 mJ/kg or less, 50.0 mJ/kg or less, 49.8 mJ/kg or less, or 49.5 mJ/kg or less, as measured by the same measurement method as the flowability shear force measurement method, and although the lower limit is not limited, the cohesive breakage energy (Break Energy) may be 20.0 mJ/kg or more or 30.0 mJ/kg or more. For example, the core-shell particles may have a cohesive breakage energy of 20 to 100 mJ/kg, 20 to 80 mJ/kg, 20 to 70.0 mJ/kg, 20 to 65 mJ/kg, 20 to 60 mJ/kg, 20 to 55 mJ/kg, 20 to 51 mJ/kg, 20 to 50 mJ/kg, or 30 to 50 mJ/kg.

The flowability shear force (Cohesion Thickness) of the core-shell particles may be a shear force between stationary particles and flowing particles during drum rotation, and the cohesive breakage energy (Break Energy) may refer to energy required for stationary particles to form an avalanche, and thus the flowability shear force (Cohesion Thickness) and the cohesive breakage energy (Break Energy) may indicate dynamic flowability of the core-shell particles.

The core-shell particles may have significantly low interparticle cohesion, with a flowability shear force (Cohesion Thickness) and a cohesive breakage energy (Break Energy) within the ranges described above. Accordingly, the core-shell particles may not agglomerate with each other during processes such as transportation, processing, storage, or stirring, and may thus have markedly excellent flowability.

In an embodiment of the present disclosure, the core-shell particles may have a flowability property energy (Basic Flowability Energy, BFE) of 1,000 mJ or less, 800 mJ or less, 700 mJ or less, 680 mJ or less, 644 mJ or less, 621 mJ or less, 617 mJ or less, 604 mJ or less, 600 mJ or less, 576 mJ or less, 556 mJ or less, 550 mJ or less, 512 mJ or less, 500 mJ or less, or 498 mJ or less, as measured by the measurement method defined in the present disclosure, and although the lower limit is not limited, the flowability property energy may be 200 mJ or more, 300 mJ or more, or 400 mJ or more. The core-shell particles may have a flowability property energy of 200 to 1,000 mJ, 200 to 800 mJ, 200 to 700 mJ, 200 to 600 mJ, 200 to 550 mJ, 300 to 550 mJ, or 300 to 400 mJ.

In another embodiment of the present disclosure, the core-shell particles may have a cohesive energy (Specific Energy, SE) of 10.0 mJ/g or less, 6.0 mJ/g or less, 5.0 mJ/g or less, 4.3 mJ/g or less, 4.0 mJ/g or less, 3.9 mJ/g or less, 3.8 mJ/g or less, 3.6 mJ/g or less, 3.5 mJ/g or less, or 3.2 mJ/g or less, as measured by the same measurement method as the flowability property energy (Basic Flowability Energy, BFE), and although the lower limit is not limited, the cohesive energy may be 1.0 mJ/g or more, 2.0 mJ/g or more, or 3.0 mJ/g or more.

The core-shell particles may have a low static flowability with the flowability property energy and the cohesive energy within the ranges described above, because the acrylic-based resin particles are aggregated on the surface of the aggregate-type core to uniformly cover the surface, thereby preventing the fluorine-based resin particles included in the aggregate-type core from undergoing fibrillation in advance, and thus the core-shell particles may have excellent flowability and excellent storage stability.

Accordingly, the core-shell particle may include a shell layer uniformly formed by aggregation of acrylic-based resin particles on the surface of the aggregate-type core, thereby preventing the fluororesin from undergoing fibrillation in advance, and thus the core-shell particle may simultaneously have markedly excellent static flowability and dynamic flowability in a process, and may have excellent storage stability in that no cake is formed even after long-term storage.

That is, in an embodiment of the present disclosure, the core-shell particles may have excellent storage stability as measured by the measurement method defined in the present disclosure, which may mean that there is no caking between the core-shell particles left under a constant pressure.

The excellent storage stability of the core-shell particles is evaluated by allowing the particles to stand under a constant pressure and measuring a degree to which the particles are aggregated with each other to form a cake, and the core-shell particles may have excellent storage stability without caking, as compared with conventional single fluorine-based resin particles and single core-shell particles in which the surface of the single fluorine-based resin particles is coated with an acrylic-based resin.

Accordingly, the core-shell particles may not only have excellent flowability without pre-agglomeration, but also may have excellent long-term stability because the core-shell particles do not agglomerate with each other even when left (stacked) under a constant pressure for a long period of time.

In an aspect of the present disclosure, a mixture including the core-shell particles may be provided.

The core-shell particles may have excellent flowability without pre-agglomeration, and, when used as a binder, may have excellent fibrillation so that a composition contained in the mixture may not be easily detached.

In an embodiment of the present disclosure, the mixture may include the core-shell particles in an amount of 0.1 to 20 wt% based on the total weight thereof, and in another embodiment, the mixture may include the core-shell particles in an amount of 1 to 10 wt%; however, the present disclosure is not limited thereto.

Since the core-shell particles have excellent binder properties, a kneaded mixture including the core-shell particles in an amount within the above-described range may allow the included particles to be excellently bound to maintain a shape.

In an embodiment of the present disclosure, the mixture may include an electrode active material.

The core-shell particles may be used as a binder material in various fields such as a paint, an anti-dripping agent, a powder coating material, a fiber coating material, or an automobile part, but may be particularly useful as a binder for electrode active materials because the core-shell particles may bind the electrode active materials and may thus provide excellent maintenance of the mixture.

The electrode active material is not particularly limited as long as it is known to those skilled in the art, but may be, for example, a positive electrode active material containing a lithium composite metal oxide including lithium and one or more metals such as cobalt, manganese, nickel, or aluminum, which is a compound capable of reversible intercalation and deintercalation of lithium; and a carbon-based negative electrode active material such as crystalline carbon, amorphous carbon, or a carbon composite, which may be used alone or in a mixture of two or more thereof.

In an embodiment of the present disclosure, the mixture may further include a conductive agent.

The conductive agent is not particularly limited as long as it has conductivity without causing a chemical change in the battery, and examples thereof include graphite; carbon-based materials such as carbon black, acetylene black, Ketjen black, channel black, furnace black, lamp black, and thermal black; conductive fibers such as carbon fibers or metal fibers; metal powders such as fluorinated carbon, aluminum, and nickel powder; conductive whiskers such as zinc oxide and potassium titanate; conductive metal oxides such as titanium oxide; and conductive materials such as polyphenylene derivatives.

In an embodiment of the present invention, the weight percentage of the mixture including the core-shell particles as a binder, as measured by the measurement method defined in the present invention, retained on a 6.30-mm sieve may be 90 wt% or more, preferably 95 wt% or more, more preferably 98 wt% or more, and most preferably 100 wt%.

The core-shell particles may bind particles included in the mixture due to excellent binder properties and fibrillation, thereby allowing the mixture to maintain a shape, and, in particular, may have more excellent binder properties with respect to electrode active materials and may thus enable preparation of a mixture having 90 wt% or more retained on a 6.30-mm sieve; accordingly, the mixture described above may be useful as a binder for electrode active materials.

That is, since the core-shell particles may have the above-described markedly excellent flowability and excellent storage stability, the core-shell particles may be useful in conventional applications using a fluorine-based resin, such as an anti-dripping agent, a powder coating material, a fiber coating material, or an automobile part, and, in particular, since the core-shell particles may have the above-described markedly excellent flowability and excellent storage stability and may have binder properties superior to those of a pure fluorine-based resin, the core-shell particles may be useful as an electrode binder.

Hereinafter, the core-shell particle will be described in more detail with reference to examples. However, the following examples are provided only as references to explain the present disclosure in detail, and the present disclosure is not limited thereto, and may be implemented in various forms. In addition, unless otherwise defined, all technical terms and scientific terms used herein have the same meanings as commonly understood by those skilled in the art to which the present invention pertains. In addition, the terms used in the description of the present disclosure are merely used to effectively describe a specific example, but are not intended to limit the present disclosure.

[Measurement Methods]

1. Measurement of Weight Average Molecular Weight (Mw) [kg/mol]

In order to measure the molecular weight of the non-fluorine-based resin, 10 mg of the extracted non-fluorine-based resin was dissolved in 10 ml of tetrahydrofuran (THF), and filtered using a 0.2 $\mu$m Teflon filter, and then the molecular weight was measured using gel permeation chromatography (GPC) manufactured by Waters.

2. Measurement of Glass Transition Temperature (Tg) [°C]

The non-fluorine-based resins were measured for two cycles under a temperature-increase condition of 10 °C/min using a Q20 DSC (differential scanning calorimetry) manufactured by TA Instruments, and then the glass transition temperature was calculated from an inflection point of the second cycle by the half-Cp method.

3. Measurement of Ratio of Fluorine-Based Resin to Non-Fluorine-Based Resin

The weight loss was measured by increasing the temperature of 10 mg of the dried particles to 600°C at 10 °C/min using TGA. By utilizing the property that the non-fluorine-based resin is thermally decomposed first, the ratio of the fluorine-based resin to the non-fluorine-based resin was measured based on the degree of weight loss. In the case of single-type core-shell particles, 20 g of acetone was added to 10 g of the single-type core-shell particles and the mixture was shaken, and then the mixture was added dropwise to 400 g of methanol to obtain a precipitated non-fluorine-based resin. The precipitated non-fluorine-based resin was separated using a vacuum filter, washed three times with methanol, and then vacuum-dried in an oven at 25°C for 24 hours.

4. Measurement of Average Particle Diameter and Particle Size Distribution

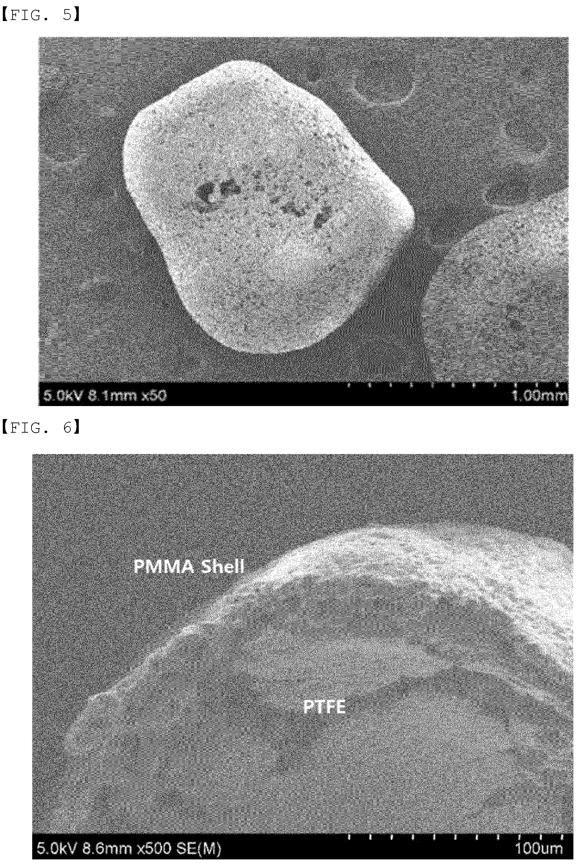

The particles were measured based on a wet measurement method using a laser diffraction particle size distribution analyzer (Malvern Panalytical, MASTERSIZER 3000 hydro). As the average particle diameter, a D50 value, which is an average particle diameter based on volume-based measurement (when Dn means a particle diameter corresponding to n% in cumulative fraction, "D50" corresponds to 50% in cumulative fraction based on volume), was used. In the measurement of the average particle diameter, as the particle size distribution, a Span value, which is a value calculated by a particle size distribution analyzer using the method of (D90-D10)/D50, was used. Further, through the image (FIG. 5) of the core-shell particles captured by a scanning electron microscope (SEM), it was confirmed that the average particle diameter (D50) of the core-shell particles was similar to that of the acrylic-based resin particles measured above.

5. Analysis of Structure of Core-Shell Particles

For analysis of the structure of the particles, the core-shell particles were captured by a scanning electron microscope. Further, for clear distinction between the aggregate-type core and the shell layer, bisected core-shell particles were captured by a scanning electron microscope, and the captured photograph of the core-shell particles and the photograph of the bisected core-shell particles are shown in FIG. 6. The image measurement method was performed on 10 particles to measure a shell layer thickness, and an average thereof was obtained and cross-verified using the core-shell particles and the particle size.

Further, in order to measure the size of the aggregated core-shell particles prepared in the examples and comparative examples and the surface distribution of the shell, images of each particle were captured 10 times using the scanning electron microscope (SEM) below to measure an average diameter visually observed, and it was confirmed that the average diameter was similar to the average particle diameter (D50) measured above. The surface coverage level of the core-shell was visually observed, and the surface coverage level was classified as follows:

o: covering 90% or more of the core surface as visually observed;
△: covering 90 to 30% of the core surface as visually observed; and
X: covering 30% or less of the core surface as visually observed.

In addition, in order to confirm whether the aggregate-type core and the shell layer of the core-shell particles prepared in Example 1 were clearly formed, energy dispersive X-ray spectrometry (SEM-EDX) was used to capture images of the core-shell particles and the bisected core-shell particles, and the results are shown in FIG. 7.

6. Analysis of Storage Stability

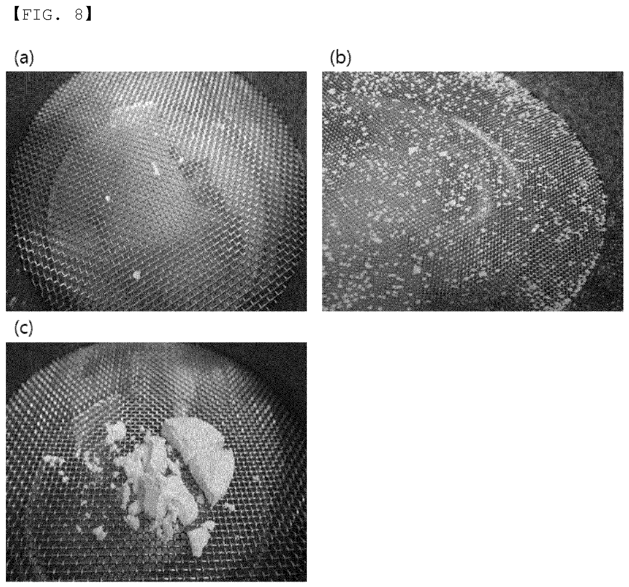

A stainless-steel container was charged with 10 g of each particle sample, and the container was left at 20°C for 4 hours while pressure was applied using an 11.3 kg-weight. Thereafter, the particles left in the stainless-steel container were taken out to prepare a block of the particles. Thereafter, the particles were placed on a sieve with a mesh opening of 2 mm, and the particles were placed on a sieve with a mesh opening of 0.6 mm and a sieve with a mesh opening of 0.2 mm. Thereafter, the block of the particles placed on the sieve was crushed for 1 minute using a vibratory sieve shaker (Haver & Boecher OHG, EML 200 Premium), and thereafter, the weight of the crushed block of the particles was measured and calculated by the following Equation 1, and FIG. 8 shows captured images of the particles remaining after sieving.

Storage stability (%) = [mass of crushed particle block (g)/mass of initial particle block (g)] $\times$ 100          [Equation 1]

7. Measurement of Total Flowability Energy and Cohesive energy of Particles

The flowability and cohesive energy of the particles were measured using a powder rheometer (Freeman Technology Ltd., FT4). Specifically, in the method for measuring the flowability and cohesive energy of the particles, after filling a cylinder having a diameter of 50 mm with the particles, an impeller was rotated at a tip speed of 100 mm/s (8 times), 70 mm/s (1 time), 40 mm/s (1 time), or 10 mm/s (1 time), while repeatedly moving up and down the particles in the cylinder. At this time, a total flowability energy (Basic Flowability Energy, BFE) was measured when the particles moved downward in the cylinder, and cohesive energy (Specific Energy, SE) was measured when the particles moved upward, and BFE and SE were measured while the particles in the cylinder were moved up and down a total of 11 times, and an average value thereof was calculated.

8. Measurement of Flowability Shear Force and Cohesive Force of Particles

The flowability shear force and cohesive force of the particles were measured using a dynamic powder flow analyzer (Mercury, Revolution). Specifically, after filling a 100-cc drum with 25 cc of the particles, the drum was rotated at 0.3 rpm, and the potential energy of the particles in the drum was measured using a camera. At this time, when an avalanche (a phenomenon in which the particles rise with the drum and collapse) occurred 100 times in the drum, average values of Cohesion Thickness (shear force between stationary particles and flowing particles during drum rotation) and Break Energy (energy required for stationary particles to form an avalanche) of the particles in the drum were calculated.

9. Measurement of Binder Performance and Fibrillation

In order to evaluate the fibrillation of the particles, a mixture containing 96 wt% of an active material (NCM622 (nickel/cobalt/manganese = 6/2/2 wt%)), 2 wt% of a conductive agent (Ketjen Black), and 2 wt% of the particles of the examples and comparative examples below as a binder was prepared.

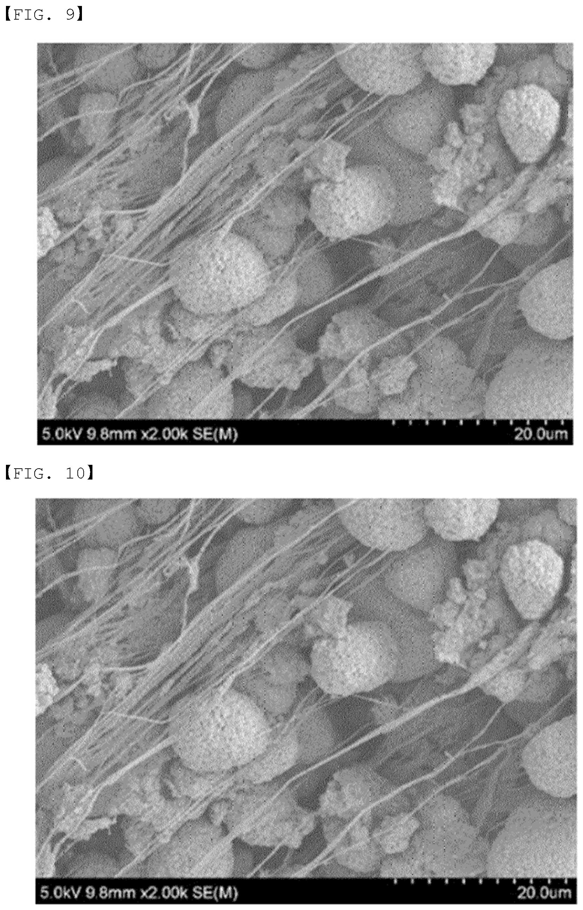

Thereafter, the mixture was pulverized at 24,000 rpm using a blender (Kochstar, KSEBD-1500), and after completion of the pulverization, the mixture was kneaded using a batch mixer (HAAKE, Rheomix 600) at an internal temperature of 150°C and a rotation speed of 15 rpm for 3 minutes. Thereafter, an image of the kneaded mixture including the core-shell particles of Example 1 was captured by the scanning electron microscope (SEM) below and is shown in FIG. 9, and an image of the kneaded mixture including the single-type core-shell particles of Comparative Example 1 was captured by the scanning electron microscope (SEM) below and is shown in FIG. 10.

In addition, the total mass of the kneaded sample was measured, and the kneaded mixture was first sieved using a sieve with a mesh opening of 6.3 mm and then second sieved using a sieve with a mesh opening of 4.75 mm. Through the first and second sieving described above, binder performance was specified by determining, based on the total weight of the kneaded sample, wt% of the kneaded sample having a size of 6.3 mm or more (retained on the first sieve), having a size of 4.75 or more and less than 6.3 mm (retained on the second sieve), or having a size of less than 4.75 mm (not retained on the first and second sieves).

**Preparation of Acrylic-Based Resin Particles**

[Preparation Example 1]

744.4 g of deionized water, 115.2 g of methyl methacrylate (MMA), and 28.8 g of n-butyl acrylate (nBA) were added to a 1 L reactor; 11.6 g of Tergitol TMN-100X (90% aqueous solution) manufactured by DOW as an emulsifier, 0.14 g of ammonium persulfate as an initiator, and 0.32 g of normal octyl mercaptan as a chain transfer agent were added, and the mixture was heated to 75°C while stirring at a speed of 230 rpm and nitrogen bubbling. After reaching 75°C, which is the polymerization temperature, the nitrogen bubbling was stopped, the polymerization reaction was performed for 3 hours, and the mixture was then cooled to room temperature to prepare a second dispersion solution, which is an emulsion containing acrylic-based resin particles. The results obtained by analyzing the weight average molecular weight, the glass transition temperature, and the average particle diameter are shown in Table 1.

[Preparation Example 2]

The procedure was performed in the same manner as in Preparation Example 1, except that, as monomers, 100.8 g of methyl methacrylate (MMA), 21.6 g of methacrylic acid (MAA), and 21.6 g of n-butyl acrylate (nBA) were added, and the other components were used in the same amounts. The results obtained by analyzing the weight average molecular weight, the glass transition temperature, and the average particle diameter are shown in Table 1.

[Preparation Example 3]

The procedure was performed in the same manner as in Preparation Example 1, except that, as monomers, 115.2 g of methyl methacrylate (MMA) and 28.8 g of styrene were added, and the other components were used in the same amounts. The results obtained by analyzing the weight average molecular weight, the glass transition temperature, and the average diameter are shown in Table 1.

[Table 1]

| | Tg [°C] | Mw [kg/mol] | Average particle diameter (D50) [nm] | Monomer content (calculated value) | Solid content |
|---|---|---|---|---|---|
| Preparation Example 1 | 82.2 | 139 | 594 | MMA 80 wt% nBA 20 wt% | 17.2 |
| Preparation Example 2 | 84.5 | 186 | 681 | MMA 70 wt% MAA 15 wt% nBA 15 wt% | 17.2 |
| Preparation Example 3 | 78.7 | 120 | 567 | MMA 80 wt% Styrene 20 wt% | 17.2 |

## Preparation of Core-Shell Particles

[Example 1]

291.2 g of deionized water, 291.2 g of methanol, and 4.5 g of calcium acetate monohydrate (Ca(OAc)$_2$·H$_2$O) as a coagulant were added to a 1 L reactor, the mixture was stirred at a speed of 300 rpm, and the reactor temperature was heated to 60°C. Into the heated reactor, 168 g of an aqueous polytetrafluoroethylene (PTFE) dispersion (Chemours, DISP30, average particle diameter (D50): 0.22 μm, solid content: 63.5%) as a first dispersion solution was added dropwise at a rate of 5.6 g/min using a dropping funnel to form an aggregate-type core in the solvent of the reactor.

Thereafter, 157 g of the dispersion solution of Preparation Example 1 was continuously added dropwise into the reactor at a rate of 15.8 g/min using a dropping funnel to form a shell layer on a surface of the aggregate-type core, and the mixture was aged at 80°C for 1 hour. After completion of the aging, the mixture was cooled to room temperature, sufficiently washed with deionized water, and dried in a vacuum oven at 50°C for 24 hours to obtain core-shell particles.

Thereafter, physical properties were measured by the above measurement methods and are shown in Tables 3 and 4.

[Example 2]

320.0 g of deionized water, 320.0 g of methanol, and 6.9 g of calcium acetate monohydrate (Ca(OAc)2*H2O) as a coagulant were added to a 1 L reactor, the mixture was stirred at a speed of 300 RPM, and the reactor temperature was heated to 60°C. Into the heated reactor, 189.0 g of an aqueous polytetrafluoroethylene (PTFE) dispersion (Chemours, DISP30, average particle diameter (D50): 0.22 μm) as a first dispersion solution was added dropwise at a rate of 6.3 g/min using a dropping funnel to form an aggregate-type core in the solvent of the reactor.

Thereafter, 78.8 g of the dispersion solution of Preparation Example 1 was continuously added dropwise into the reactor at a rate of 7.9 g/min using a dropping funnel to form a shell layer on the aggregate-type core, and the mixture was aged at 80°C for 1 hour. After completion of the aging, the mixture was cooled to room temperature, sufficiently washed with deionized water, and dried in a vacuum oven at 50°C for 24 hours to obtain core-shell particles.

That is, the procedure was performed in the same manner as in Example 1, except that the first dispersion solution and the dispersion solution of Preparation Example 1 were added at a weight ratio of 1:0.42.

Thereafter, physical properties were measured by the above measurement methods and are shown in Tables 3 and 4.

[Example 3]

The procedure was performed in the same manner as in Example 1 except that the reactor stirring speed was set to 200 rpm.

Thereafter, physical properties were measured by the above measurement methods and are shown in Tables 3 and 4.

[Example 4]

The procedure was performed in the same manner as in Example 1 except that the reactor stirring speed was set to 500 rpm.

Thereafter, physical properties were measured by the above measurement methods and are shown in Tables 3 and 4.

[Example 5]

The procedure was performed in the same manner as in Example 1, except that, as the first dispersion solution, a dispersion solution having a solid content of 63.5% and prepared by dispersing PTFE particles having an average particle diameter of 40 μm (Sigma-Aldrich) in deionized water was used.
Thereafter, physical properties were measured by the above measurement methods and are shown in Tables 3 and 4.

[Example 6]

The procedure was performed in the same manner as in Example 1, except that, as the first dispersion solution, a dispersion solution having a solid content of 63.5% and prepared by dispersing PTFE particles having an average particle diameter of 1 μm (Sigma-Aldrich) in deionized water was used.
Thereafter, physical properties were measured by the above measurement methods and are shown in Tables 3 and 4.

[Example 7]

The procedure was performed in the same manner as in Example 1, except that, instead of the dispersion solution of Preparation Example 1, the dispersion solution of Preparation Example 2 was used.
Thereafter, physical properties of the prepared aggregate-type core particles were measured by the above measurement methods and are shown in Tables 3 and 4.

[Example 8]

The procedure was performed in the same manner as in Example 1, except that, instead of the dispersion solution of Preparation Example 1, the dispersion solution of Preparation Example 3 was used.
Thereafter, physical properties were measured by the above measurement methods and are shown in Tables 3 and 4.

[Example 9]

The procedure was performed in the same manner as in Example 1 except that an aqueous solution containing deionized water and methanol at a weight ratio of 1:0.43 was used by adding 407.7 g of deionized water and 174.7 g of methanol.
Thereafter, physical properties were measured by the above measurement methods and are shown in Tables 3 and 4.

[Example 10]

The procedure was performed in the same manner as in Example 1, except that, as an organic solvent, ethanol was used instead of methanol.
Thereafter, physical properties were measured by the above measurement methods and are shown in Tables 3 and 4.

[Example 11]

The procedure was performed in the same manner as in Example 1, except that, as a coagulant, 7.1 g of aluminum nitrate nonahydrate was added instead of calcium acetate monohydrate (Ca(OAc)2*H2O) so that a coagulant concentration in the aqueous solution was 1.20 wt%.
Thereafter, physical properties were measured by the above measurement methods and are shown in Tables 3 and 4.

[Comparative Example 1]

An aqueous PTFE dispersion (Chemours, DISP-30) having an average particle diameter of 0.21 μm, a solid

content concentration of 30%, and a standard specific gravity (SSG) of 2.16 to 2.22 was prepared. Subsequently, 2,448.0 g of the PTFE dispersion and 48.96 g of a 90% aqueous solution of polyethylene glycol trimethylnonyl ether having a molecular weight of an ethylene glycol repeating unit exhibiting hydrophilicity of 384 g/mol were added to a 4 L reactor, and the mixture was heated to 75°C while stirring at a speed of 350 rpm and nitrogen bubbling. After the temperature was increased to 75°C, the nitrogen bubbling was stopped, and, after 15 minutes, a monomer mixture consisting of 223.20 g of methyl methacrylate (MMA) and 55.08 g of n-butyl acrylate (nBA) and additionally 0.40 g of normal octyl mercaptan as a chain transfer agent was added dropwise over 15 minutes. After 15 minutes from the addition of the monomer mixture solution, an aqueous solution of 68.4 g of distilled water and 0.92 g of potassium persulfate was added dropwise into the reactor over about 10 minutes. After completion of the addition of potassium persulfate, the polymerization reaction was performed for 3 hours, and the mixture was then cooled to 30°C to obtain a white emulsion. In addition, the emulsion was freeze-dried at -60°C under a condition of 10 mTorr for 72 hours to obtain a white powder.

Thereafter, physical properties were measured by the above measurement methods and are shown in Tables 3 and 4.

[Comparative Example 2]

Polytetrafluoroethylene (PTFE) powder (Chemours, 601X) having an average particle diameter similar to that of the aggregate-type core of Example 1 was used. The polytetrafluoroethylene (PTFE) powder (Chemours, 601X) had an average particle diameter (D50) of 532 $\mu$m according to the measurement result in the TDS.

Thereafter, physical properties were measured by the above measurement methods and are shown in Tables 3 and 4.

[Comparative Example 3]

The procedure was performed in the same manner as in Example 1, except that, without adding an organic solvent into the reactor, 582.4 g of deionized water was used.

Thereafter, physical properties of the prepared aggregate-type core particles were measured by the above measurement methods and are shown in Tables 3 and 4.

Thereafter, physical properties were measured by the above measurement methods and are shown in Tables 3 and 4.

[Comparative Example 4]

The procedure was performed in the same manner as in Example 1 except that no coagulant was used.

Thereafter, physical properties were measured by the above measurement methods and are shown in Tables 3 and 4.

[Comparative Example 5]

291.2 g of deionized water, 291.2 g of methanol, and 4.5 g of calcium acetate monohydrate (Ca(OAc)2*H2O) as a coagulant were added to a 1 L reactor, the mixture was stirred at a speed of 300 RPM, and the reactor temperature was heated to 60°C. Into the heated reactor, 168.0 g of an aqueous polytetrafluoroethylene (PTFE) dispersion (Chemours, DISP30, average particle diameter (D50): 0.22 $\mu$m) as a first dispersion solution was added dropwise at a rate of 5.6 g/min using a dropping funnel to obtain aggregate-type cores in the solvent of the reactor. The resulting reaction mixture was maintained at 60°C for 10 minutes and then cooled to room temperature, and the aggregate-type cores were sufficiently washed with deionized water and dried in a vacuum oven at 50°C for 24 hours to obtain particles.

That is, only aggregate-type cores on which a shell layer was not formed were prepared in Example 1. Thereafter, physical properties were measured by the above measurement methods and are shown in Tables 3 and 4.

[Table 2]

| | | Aggregate-type core formation step | | | | | | Shell layer formation step | |
|---|---|---|---|---|---|---|---|---|---|
| | | Organic solvent | Water:organic solvent (weight ratio) | Coagulant | Coagulant concentration (wt%) | Stirring speed (rpm) | PTFE resin particles ($\mu$m) | Acrylic-based resin particles | Amount added (weight ratio of first dispersion solution to second dispersion solution) |
| Example | 1 | Methanol | 1:1 | Calcium acetate monohydrate | 0.77 | 300 | 0.2 | Preparation Example 1 | 1:0.94 |
| | 2 | Methanol | 1:1 | Calcium acetate monohydrate | 0.77 | 300 | 0.2 | Preparation Example 1 | 1:0.42 |
| | 3 | Methanol | 1:1 | Calcium acetate monohydrate | 0.77 | 200 | 0.2 | Preparation Example 1 | 1:0.94 |
| | 4 | Methanol | 1:1 | Calcium acetate monohydrate | 0.77 | 500 | 0.2 | Preparation Example 1 | 1:0.94 |
| | 5 | Methanol | 1:1 | Calcium acetate monohydrate | 0.77 | 300 | 40.0 | Preparation Example 1 | 1:0.94 |
| | 6 | Methanol | 1:1 | Calcium acetate monohydrate | 0.77 | 300 | 1.0 | Preparation Example 1 | 1:0.94 |
| | 7 | Methanol | 1:1 | Calcium acetate monohydrate | 0.77 | 300 | 0.2 | Preparation Example 2 | 1:0.94 |
| | 8 | Methanol | 1:1 | Calcium acetate monohydrate | 0.77 | 300 | 0.2 | Preparation Example 3 | 1:0.94 |
| | 9 | Methanol | 1:0.43 | Calcium acetate monohydrate | 0.77 | 300 | 0.2 | Preparation Example 1 | 1:0.94 |

(continued)

| | | Aggregate-type core formation step | | | | | | Shell layer formation step | |
|---|---|---|---|---|---|---|---|---|---|
| | | Organic solvent | Water:organic solvent (weight ratio) | Coagulant | Coagulant concentration (wt%) | Stirring speed (rpm) | PTFE resin particles (μm) | Acrylic-based resin particles | Amount added (weight ratio of first dispersion solution to second dispersion solution) |
| | 10 | Ethanol | 1:1 | Calcium acetate monohydrate | 0.77 | 300 | 0.2 | Preparation Example 1 | 1:0.94 |
| | 11 | Methanol | 1:1 | Aluminum nitrate nonahydrate | 1.20 | 300 | 0.2 | Preparation Example 1 | 1:0.94 |
| Comparative Example | 1 | Single-type core-shell particles | | | | | | | |
| | 2 | Single PTFE particles | | | | | | | |
| | 3 | No organic solvent used | | Calcium acetate monohydrate | 0.77 | 300 | 0.2 | Preparation Example 1 | 1:0.94 |
| | 4 | Methanol | 1:1 | No coagulant used | - | 300 | 0.2 | Preparation Example 1 | 1:0.94 |
| | 5 | Methanol | 1:1 | Calcium acetate monohydrate | 0.77 | 300 | 0.2 | No shell layer formed | |

[Table 3]

| Classification | | (Aggregate-type) core | | Shell layer | Core-shell particles | | |
| --- | --- | --- | --- | --- | --- | --- | --- |
| | | Average particle diameter (D50) (SEM) | PTFE content (TGA) | Shell thickness (SEM) | Average particle diameter (D50) (Mastersizer) | Average particle diameter Span (Mastersizer) | Core aggregate surface cover (SEM) |
| Unit | | (μm) | wt% | (μm) | (μm) | Unitless | Unitless |
| Example | 1 | 970 | 81 | 70 | 1103 | 1.26 | ○ |
| | 2 | 850 | 91 | 60 | 974 | 1.22 | ○ |
| | 3 | 700 | 80 | 50 | 830 | 1.20 | ○ |
| | 4 | 1200 | 82 | 80 | 1335 | 1.33 | ○ |
| | 5 | 1000 | 80 | 65 | 1130 | 1.38 | ○ |
| | 6 | 1000 | 80 | 70 | 1140 | 1.27 | ○ |
| | 7 | 1040 | 80 | 70 | 1166 | 1.27 | ○ |
| | 8 | 920 | 78 | 60 | 1045 | 1.23 | ○ |
| | 9 | 890 | 81 | 60 | 1020 | 1.38 | ○ |
| | 10 | 930 | 82 | 65 | 1051 | 1.31 | ○ |
| | 11 | 1100 | 81 | 70 | 1227 | 1.45 | ○ |
| Comparative Example | 1 | 0.23 (TEM) | 80 | 0.01 (TEM) | 0.26 | 1.13 | ○ |
| | 2 | 610 | 99 | No shell layer formed | 610 | 1.3 | X |
| | 3 | 850 | 94 | Insufficient shell layer formation | 960 | 2.06 | X |
| | 4 | 970 | 95 | Insufficient shell layer formation | 1100 | 2.60 | X |
| | 5 | 990 | 99 | No shell layer formed | 984 | 2.71 | X |

[Table 4]

| Classification | | Flowability | | | | Storage stability | Binding performance-fibrillation | | |
|---|---|---|---|---|---|---|---|---|---|
| | | BFE (FT4) | SE (FT4) | Cohesion Thickness | Break Energy | Cake after caking test | Sieve 1 (coarse particles) | Sieve 2 (medium particles) | Pan (fine particles) |
| Unit | | mJ | mJ/g | mJ/kg | mJ/kg | % | % | % | % |
| Example | 1 | 512 | 3.2 | 17.3 | 49.8 | 0 | 98.9 | 0.5 | 0.6 |
| | 2 | 680 | 4.3 | 20.9 | 52.8 | 0 | 98.9 | 0.9 | 0.2 |
| | 3 | 617 | 3.9 | 24.5 | 61.5 | 0 | 96.5 | 2.1 | 1.4 |
| | 4 | 576 | 3.6 | 22.3 | 50.1 | 0 | 96.7 | 1.1 | 2.2 |
| | 5 | 617 | 3.9 | 24.5 | 61.5 | 0 | 96.5 | 2.1 | 1.4 |
| | 6 | 595 | 4.2 | 25.0 | 52.1 | 0 | 96.5 | 1.3 | 2.2 |
| | 7 | 644 | 4.0 | 16.4 | 49.5 | 0 | 98.8 | 0.4 | 0.8 |
| | 8 | 498 | 3.1 | 18.4 | 59.3 | 0 | 97.3 | 1.6 | 1.1 |
| | 9 | 604 | 3.8 | 18.5 | 51.6 | 0 | 97.5 | 0.6 | 1.9 |
| | 10 | 621 | 3.9 | 17.6 | 50.4 | 0 | 98.6 | 0.5 | 0.9 |
| | 11 | 556 | 3.5 | 21.4 | 55.2 | 0 | 98.9 | 0.3 | 0.8 |
| Comparative Example | 1 | 1150 | 5.8 | 75.0 | 87.5 | 12 | 0.3 | 0 | 99.7 |
| | 2 | I/L | I/L | 416 | 165 | 60 | 99.0 | 0.2 | 0.8 |
| | 3 | I/L | I/L | 395 | 143 | 41 | 98.2 | 0.5 | 1.3 |
| | 4 | I/L | I/L | 356 | 123 | 55 | 98.6 | 0.4 | 1.0 |
| | 5 | I/L | I/L | 402 | 151.8 | 61 | 99.1 | 0 | 0.9 |

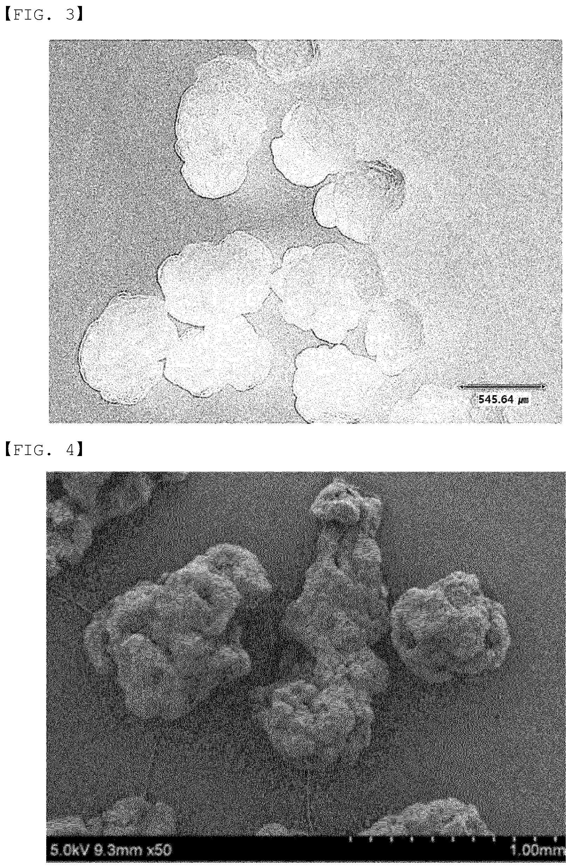

FIG. 3 is a photograph of the aggregate-type core of Example 1 captured by an optical microscope, and FIG. 4 is a photograph of the aggregate-type core of Example 1 captured by a scanning electron microscope. Referring to FIGS. 3 and 4, it can be confirmed that, in Example 1, the fluorine-based resin particles are well aggregated and thus the aggregate-type core is well formed.

FIG. 5 is a photograph of the aggregate-type core of Example 1 captured by a scanning electron microscope, and, referring to FIG. 5, it can be confirmed that, in the core-shell particles of Example 1, the acrylic-based shell layers are aggregated and the shell layer is well formed.

In addition, FIG. 6 is a photograph of the core-shell particles of Example 1 after being cut in half, captured by a scanning electron microscope, and, with reference to FIG. 6, it can be confirmed that, in the core-shell particles of Example 1, the aggregate-type core and the shell layer are formed so as to be clearly distinguishable.

In order to confirm that the core-shell particles of Example 1 are formed so that the aggregate-type core and the shell layer are clearly distinguishable, with reference to FIG. 7, which shows an SEM-EDX image of the core-shell particles of Example 1, the PTFE resin particles are shown in dark gray (substantially blue) and the acrylic-based resin particles of Preparation Example 1 are shown in light gray (substantially green), and it can be confirmed that only the PTFE resin particles are distributed in the aggregate-type core and only the acrylic-based resin particles are distributed in the shell layer, thus indicating a perfect core-shell particle form. In addition, referring to the SEM-EDX image of FIG. 7, it can be confirmed that, in the core-shell particle of Example 1, the shell layer completely coats 100% of the total surface area of the aggregate-type core.

Accordingly, referring to Table 3, it was confirmed that, in each of Examples 1 to 11, the fluorine-based resin particles were aggregated with each other to form an aggregate-type core, and the acrylic-based resin particles were aggregated on a surface of the formed aggregate-type core to form a shell layer, thereby forming a core-shell particle composed of the aggregate-type core formed of well-aggregated fluorine-based resin particles and the shell layer formed of well-aggregated acrylic-based resin particles.

In addition, referring to Table 3, when the core-shell particles prepared in Examples 3 and 4 are examined, it was confirmed that, by controlling the stirring speed, the average particle diameter of the aggregate-type core and the average particle diameter of the core-shell particles could be adjusted, and, referring to Example 2, it was confirmed that, by adjusting amounts of an aqueous polytetrafluoroethylene (PTFE) dispersion solution and an acrylic-based resin particle solution, the amount of the shell layer could be adjusted.

Further, as can be seen from Table 3, when the core-shell particles of Examples 5 and 6 are examined, it can be confirmed that, even when an average particle diameter of the fluorine-based resin particles is changed, the fluorine-based resin particles are well aggregated and aggregate-type cores and core-shell particles including the same may be prepared.

In addition, as can be seen from Table 3, it was confirmed that a shell layer could be formed of acrylic-based resin particles prepared by further adding styrene or (meth)acrylic acid, as in the core-shell particles of Examples 7 and 8.

Accordingly, it was confirmed that the core-shell particles prepared in Examples 1 to 11 have an aggregate-type core formed by aggregation of fluorine-based resin particles with each other and have a shell layer formed by aggregation of acrylic-based resin particles with each other on the surface of the formed aggregate-type core, thus having a core-shell particle form in which the aggregate-type core and the shell layer are clearly distinguishable, and it was also confirmed that the shell layer was uniformly formed on the surface of the aggregate-type core.

In addition, it was confirmed that the core-shell particles prepared in Examples 1 to 11 were well formed regardless of the average particle diameters of the fluorine-based resin particles and the acrylic-based resin particles and regardless of monomers used to prepare the acrylic-based resin particles.

In addition, it was confirmed that, in the core-shell particles prepared in Examples 1 to 11, by controlling a stirring speed of the reactor and a weight ratio of the first dispersion solution to the second dispersion solution, the average particle diameter of the core-shell particles, the average particle diameter of the aggregate-type core, and the thickness of the shell layer could be easily adjusted, and it was also confirmed that the Span value of the average particle diameter of the core-shell particles was 1.5 or less.

Since the Span value of the average particle diameter of the core-shell particles is 1.5 or less, it indicates that the average particle diameter distribution is significantly narrow, and thus indicates that the core-shell particles of the present disclosure may have a significantly uniform average particle diameter.

Accordingly, since the core-shell particles according to an embodiment of the present disclosure have the physical properties described above, the core-shell particles may have effects such as excellent flowability, excellent binder properties, and excellent storage stability, which will be described below.

Referring to Examples 1 to 11 in Table 4, it was confirmed that the aggregate-type core-shell particles of Examples 1 to 11 have low total flowability energy (Basic Flowability Energy, BFE) and low cohesive energy (Specific Energy, SE) as measured by FT4, and it was confirmed that, also in the dynamic powder flow measurement using Revolution, the measured Cohesion Thickness (shear force between stationary particles and flowing particles during drum rotation) and Break Energy (energy required for stationary particles to form an avalanche) were significantly low.

That is, the aggregate-type core-shell particles prepared in Examples 1 to 11 suggest that the fluorine-based resin particles included in the aggregate-type core are prevented from agglomerating with each other in advance, and thus the aggregate-type core-shell particles may have excellent flowability.

In addition, referring to Table 4, it was confirmed that the core-shell particles of Examples 1 to 11 not only had the excellent flowability described above, but also had excellent storage stability, in that agglomeration between the core-shell particles was prevented even when the core-shell particles were left under high pressure.

Further, referring to Table 4, it was confirmed that the core-shell particles of Examples 1 to 11 not only had the excellent flowability and storage stability described above, but also had excellent binder properties in that 95 wt% or more of the electrode mixture containing the core-shell particles for use as an electrode binder was retained on a first sieve having an opening of 6.3 mm or more.

In contrast, as can be seen from Tables 3 and 4, it was confirmed that, in Comparative Examples 3 and 4, the aggregate-type cores were not well formed, and, in addition, a shell layer was not formed by aggregation of the acrylic-based resin particles.

Accordingly, it was confirmed that the particles of Comparative Examples 3 and 4 were aggregated to such an extent that static flowability measurement by FT4 was impossible, and, also in the dynamic powder flow measurement using Revolution, the measured Cohesion Thickness and Break Energy were higher than those of the examples. In addition, referring to Table 3, it was confirmed that the particles of Comparative Examples 2 and 5, in which no shell layer was formed, had flowability so poor that measurement was impossible.

In addition, as can be seen from Tables 3 and 4, it was confirmed that the particles of Comparative Example 1 were single core-shell particles in which an acrylic-based resin was polymerized on a surface of a single PTFE particle to form a shell layer, and that, as compared with the examples, the particles had significantly high cohesion between particles and low storage stability, and, in particular, had binder properties that were significantly low compared therewith.

Accordingly, the method for producing the core-shell particles may prevent fluorine-based resin particles from agglomerating with each other in advance, enabling markedly excellent flowability and excellent storage stability to be obtained, and enabling binder properties superior to those of conventional single core-shell particles to be obtained.

Accordingly, the core-shell particles may be useful as an anti-dripping agent, a powder coating material, a fiber coating material, an automobile part, or an electrode binder.

Hereinabove, although the present disclosure has been described by specific matters and limited examples and comparative examples, they have been provided only for assisting in the entire understanding of the present disclosure. Therefore, the present disclosure is not limited to the examples, and various modifications and changes may be made by those skilled in the art to which the present disclosure pertains from this description.

Therefore, the spirit of the present disclosure should not be limited to the described examples, but the claims and all modifications equal or equivalent to the claims are intended to fall within the spirit of the present invention.

(Detailed Description of Main Elements)

    100: Core-shell particle
    10: Aggregate-type core
    11: Fluorine-based resin particle
    20: Shell layer
    21: Acrylic-based resin particle

**Claims**

1. A core-shell particle comprising:

    an aggregate-type core formed by aggregation of fluorine-based resin particles with each other; and
    a shell layer formed by aggregation of acrylic-based resin particles with each other on a surface of the aggregate-type core,
    wherein the core-shell particle has an average particle diameter (D50) of 500 to 3,000 $\mu$m.

2. The core-shell particle of claim 1, wherein the fluorine-based resin particles include a fluorine-based polymer formed by polymerizing one or two or more fluorinated monomers selected from vinylidene difluoride, vinyl fluoride, chlorotrifluoroethylene, tetrafluoroethylene, perfluoroalkyl vinyl ether, and hexafluoropropylene.

3. The core-shell particle of claim 2, wherein the fluorine-based polymer is formed by polymerizing one or two or more selected from tetrafluoroethylene, perfluoroalkyl vinyl ether, and hexafluoropropylene.

4. The core-shell particle of claim 1, wherein the acrylic-based resin particles include one or two or more selected from a methyl methacrylate homopolymer; and an acrylic-based copolymer of methyl methacrylate and one or two or more comonomers selected from ethyl (meth)acrylate, n-butyl (meth)acrylate, t-butyl (meth)acrylate, iso-butyl (meth) acrylate, lauryl (meth)acrylate, 2-ethylhexyl (meth)acrylate, and a styrene-based monomer.

5. The core-shell particle of claim 4, wherein the acrylic-based resin particles include an acrylic-based copolymer.

6. The core-shell particle of claim 4, wherein the acrylic-based copolymer has methyl methacrylate polymerized units in an amount of 70 to 99.9 wt% based on 100 wt% of the total polymerized units.

7. The core-shell particle of claim 1, wherein the aggregate-type core is in the form of an aggregate in which fluorine-based resin particles having an average particle diameter (D50) of 0.01 to 100 $\mu$m are closely aggregated with each other, and
   the aggregate-type core has an average particle diameter (D50) of 200 to 2,500 $\mu$m.

8. The core-shell particle of claim 7, wherein the fluorine-based resin particles have an average particle diameter (D50) of 0.1 to 50 $\mu$m.

9. The core-shell particle of claim 1, wherein the shell layer has a thickness of 50 to 500 $\mu$m.

10. The core-shell particle of claim 1, wherein the acrylic-based resin particles have an average particle diameter (D50) of 0.01 to 100 $\mu$m.

11. The core-shell particle of claim 10, wherein the acrylic-based resin particles have an average particle diameter (D50) of 0.1 to 50 μm.

12. The core-shell particle of claim 1, wherein the core-shell particle comprises the shell layer in an amount of 1 to 50 wt% based on the total weight thereof.

13. The core-shell particle of claim 1, wherein the aggregate-type core is coated with the shell layer on 90% or more of the entire surface area thereof.

14. The core-shell particle of claim 13, wherein the aggregate-type core is coated with the shell layer on 100% of the entire surface area thereof except for voids between the acrylic-based resin particles.

15. The core-shell particle of claim 1, wherein the core-shell particle comprises one or two or more coagulants selected from acetate, sulfate, and nitrate.

16. The core-shell particle of claim 1, wherein the core-shell particle has a shear force (Cohesion Thickness) of 50 mJ/kg or less between a static core-shell particle and a flowing core-shell particle, as measured 100 times at 0.3 rpm using a dynamic powder flow analyzer manufactured by Mercury Scientific Inc.

17. The core-shell particle of claim 1, wherein the core-shell particle has a cohesive breakage energy (Break Energy) of 100 mJ/kg or less required for a static core-shell particle to form an avalanche, as measured 100 times at 0.3 rpm using a dynamic powder flow analyzer manufactured by Mercury Scientific Inc.

18. The core-shell particle of claim 1, wherein the core-shell particle has a total flowability energy (Basic Flowability Energy, BFE) of 1,000 mJ or less and a cohesive energy (Specific Energy, SE) of 10 mJ/kg or less, as measured using a powder rheometer manufactured by Freeman Technology Ltd.

19. A mixture comprising the core-shell particles of any one of claims 1 to 18.

20. The mixture of claim 19, wherein the mixture further comprises an electrode active material.

21. The mixture of claim 19, wherein the mixture comprises the core-shell particles in an amount of 0.1 to 20 wt% based on the total weight thereof.

22. The mixture of claim 19, wherein 95 wt% or more of the mixture is retained on a 6.3-mm sieve.

23. A method for producing core-shell particles, the method comprising:

forming an aggregate-type core in which fluorine-based resin particles are aggregated by adding a first dispersion solution in which the fluorine-based resin particles are dispersed to an aqueous solution containing an organic solvent and a coagulant; and
forming a shell layer by adding a second dispersion solution in which acrylic-based resin particles are dispersed to the aqueous solution in which the aggregate-type core is formed, so that the acrylic-based resin particles are aggregated on a surface of the aggregate-type core,
wherein the aggregate-type core has an average particle diameter (D50) of 200 to 2,500 μm.

24. The method of claim 23, wherein the organic solvent is a C₁-C₇ aliphatic alcohol, a C₁-C₄ alkyl acetate, or a mixed solvent thereof.

25. The method of claim 23, wherein the aqueous solution contains deionized water and an organic solvent mixed at a weight ratio of 1:0.1 to 9.

26. The method of claim 23, wherein the coagulant is one or two or more selected from acetate, sulfate, and nitrate.

27. The method of claim 23, wherein the coagulant is contained in the aqueous solution at a concentration of 0.1 to 5 wt%.

28. The method of claim 23, wherein, in the forming of the aggregate-type core, the first dispersion solution is added in an amount of 10 to 60 parts by weight based on 100 parts by weight of the aqueous solution.

29. The method of claim 23, wherein, in the forming of the aggregate-type core, a stirring speed is 100 to 1,000 rpm.

30. The method of claim 23, wherein, in the forming of the aggregate-type core, the fluorine-based resin particles are aggregated at 40 to 90°C.

31. The method of claim 23, wherein the first dispersion solution has a solid content of 30 to 80 wt% based on the total weight thereof.

32. The method of claim 23, wherein, in the forming of the shell layer, the acrylic-based resin particles are aggregated at 50 to 90°C to form the shell layer.

33. The method of claim 23, wherein the second dispersion solution has a solid content of 10 to 50 wt% based on the total weight thereof.

34. The method of claim 23, wherein the first dispersion solution and the second dispersion solution are added at a weight ratio of 1:0.1 to 1.5.

【FIG. 1】

【FIG. 2】

【FIG. 3】

【FIG. 4】

【FIG. 5】

5.0kV 8.1mm x50                                    1.00mm

【FIG. 6】

PMMA Shell

PTFE

5.0kV 8.6mm x500 SE(M)                              100um

【FIG. 7】

【FIG. 8】

(a)

(b)

(c)

【FIG. 9】

5.0kV 9.8mm x2.00k SE(M)     20.0um

【FIG. 10】

5.0kV 9.8mm x2.00k SE(M)     20.0um

## INTERNATIONAL SEARCH REPORT

| International application No. |
| --- |
| **PCT/KR2024/013310** |

| A. | CLASSIFICATION OF SUBJECT MATTER |
| --- | --- |

**C08J 3/12**(2006.01)i; **C08F 6/18**(2006.01)i; **H01M 4/62**(2006.01)i; **C08J 3/16**(2006.01)i

According to International Patent Classification (IPC) or to both national classification and IPC

| B. | FIELDS SEARCHED |
| --- | --- |

Minimum documentation searched (classification system followed by classification symbols)

C08J 3/12(2006.01); C08F 2/22(2006.01); C08F 2/30(2006.01); C08F 259/08(2006.01); C08F 6/18(2006.01); C08J 5/18(2006.01); C08L 51/00(2006.01); G03G 9/08(2006.01); G03G 9/087(2006.01); G03G 9/097(2006.01); H01M 10/05(2010.01); H01M 4/13(2010.01); H01M 4/62(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 코어-쉘 입자 (core-shell particle), 아크릴계 수지입자 (acrylic resin particle), 불소계 수지입자 (fluorine-based resin particle), 응집체 (aggregate), 비닐리덴디플루오라이드 (vinylidene fluoride), 테트라플루오로에틸렌 (tetrafluoroethylene)

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| A | KR 10-2530988 B1 (LX MMA CORP.) 11 May 2023 (2023-05-11)<br>See claims 1, 9 and 12-16; paragraphs [0001], [0046]-[0050] and [0053]; example 1; and table 1. | 1-34 |
| A | JP 2008-287256 A (TOSHIBA CORP. et al.) 27 November 2008 (2008-11-27)<br>See claims 2 and 9; paragraphs [0045], [0046] and [0049]; and example 1. | 1-34 |
| A | JP 2019-112620 A (DAIKIN INDUSTRIES LTD. et al.) 11 July 2019 (2019-07-11)<br>See claims 1 and 2. | 1-34 |
| A | JP 2013-073921 A (PANASONIC CORP.) 22 April 2013 (2013-04-22)<br>See claims 1, 6 and 11; and paragraph [0024]. | 1-34 |

| ✓ Further documents are listed in the continuation of Box C. | ✓ See patent family annex. |
| --- | --- |

| * Special categories of cited documents: | "T" later document published after the international filing date or priority date and not in conflict with the application but cited to understand the principle or theory underlying the invention |
| --- | --- |
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| **10 December 2024** | **10 December 2024** |

| Name and mailing address of the ISA/KR | Authorized officer |
| --- | --- |
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**

| International application No. |
| --- |
| **PCT/KR2024/013310** |

| C. | DOCUMENTS CONSIDERED TO BE RELEVANT | | |
| --- | --- | --- | --- |
| Category* | Citation of document, with indication, where appropriate, of the relevant passages | | Relevant to claim No. |
| A | JP 2003-506546 A (3M INNOVATIVE PROPERTIES COMPANY) 18 February 2003 (2003-02-18)<br>  See claims 1, 2, 7 and 12. | | 1-34 |
| A | KR 10-2014-0138057 A (LG CHEM, LTD.) 03 December 2014 (2014-12-03)<br>  See claim 1. | | 1-34 |
| A | JP 2023-117949 A (FUJIFILM BUSINESS INNOVATION CORP.) 24 August 2023 (2023-08-24)<br>  See claim 1. | | 1-34 |
| PX | KR 10-2651565 B1 (LX MMA CORP.) 28 March 2024 (2024-03-28)<br>  See claims 1-8 and 10-28.<br>  (This document is a published earlier application that serves as a basis for claiming priority of the present international application.) | | 1-22 |
| PX | KR 10-2660844 B1 (LX MMA CORP.) 26 April 2024 (2024-04-26)<br>  See claims 1-25.<br>  (This document is a published earlier application that serves as a basis for claiming priority of the present international application.) | | 23-34 |

Form PCT/ISA/210 (second sheet) (July 2022)

## INTERNATIONAL SEARCH REPORT
### Information on patent family members

International application No.

**PCT/KR2024/013310**

| Patent document cited in search report | | | Publication date (day/month/year) | Patent family member(s) | | | Publication date (day/month/year) |
|---|---|---|---|---|---|---|---|
| KR | 10-2530988 | B1 | 11 May 2023 | WO | 2024-005345 | A1 | 04 January 2024 |
| JP | 2008-287256 | A | 27 November 2008 | US | 2008-0286678 | A1 | 20 November 2008 |
| | | | | US | 8029962 | B2 | 04 October 2011 |
| JP | 2019-112620 | A | 11 July 2019 | CN | 111433240 | A | 17 July 2020 |
| | | | | EP | 3702385 | A1 | 02 September 2020 |
| | | | | JP | 6796125 | B2 | 02 December 2020 |
| | | | | RU | 2756456 | C1 | 30 September 2021 |
| | | | | TW | 201938612 | A | 01 October 2019 |
| | | | | US | 11859075 | B2 | 02 January 2024 |
| | | | | US | 2021-0070974 | A1 | 11 March 2021 |
| | | | | WO | 2019-124215 | A1 | 27 June 2019 |
| JP | 2013-073921 | A | 22 April 2013 | | None | | |
| JP | 2003-506546 | A | 18 February 2003 | AU | 2000-27061 | A1 | 05 March 2001 |
| | | | | AU | 2706100 | A | 05 March 2001 |
| | | | | DE | 69917815 | T2 | 23 June 2005 |
| | | | | EP | 1208138 | A1 | 29 May 2002 |
| | | | | EP | 1208138 | B1 | 02 June 2004 |
| | | | | JP | 2003-506546 | T | 18 February 2003 |
| | | | | US | 2001-0019770 | A1 | 06 September 2001 |
| | | | | US | 6251521 | B1 | 26 June 2001 |
| KR | 10-2014-0138057 | A | 03 December 2014 | CN | 104981927 | A | 14 October 2015 |
| | | | | CN | 104981927 | B | 08 June 2018 |
| | | | | EP | 3001487 | A1 | 30 March 2016 |
| | | | | EP | 3001487 | A4 | 09 November 2016 |
| | | | | EP | 3001487 | B1 | 18 October 2017 |
| | | | | KR | 10-1597745 | B1 | 25 February 2016 |
| | | | | US | 10044041 | B2 | 07 August 2018 |
| | | | | US | 2016-0156038 | A1 | 02 June 2016 |
| | | | | WO | 2014-189294 | A1 | 27 November 2014 |
| JP | 2023-117949 | A | 24 August 2023 | CN | 116627010 | A | 22 August 2023 |
| | | | | US | 2023-0259049 | A1 | 17 August 2023 |
| KR | 10-2651565 | B1 | 28 March 2024 | | None | | |
| KR | 10-2660844 | B1 | 26 April 2024 | | None | | |

Form PCT/ISA/210 (patent family annex) (July 2022)

**REFERENCES CITED IN THE DESCRIPTION**

**Patent documents cited in the description**

- JP 2019112620 A